# EUROPEAN PATENT APPLICATION

(11) **EP 4 746 215 A1**
(43) Date of publication of application: **20.05.2026**
(21) Application number: 24851731.0
(22) Date of filing: 01.08.2024
(51) Int. Cl.: H01R 35/04

(54) **ROTARY CONNECTOR DEVICE**

(30) Priority: 04.08.2023 JP 2023128118; 22.09.2023 JP 2023159259; 26.09.2023 JP 2023163587; 01.12.2023 JP 2023204050
(71) Applicant: FURUKAWA ELECTRIC CO., LTD., Chiyoda-ku, Tokyo 100-8322 (JP); FURUKAWA AUTOMOTIVE SYSTEMS INC., Shiga 522-0242 (JP)
(72) Inventor: YAMAGOSHI, Kenji, Inukami-gun, Shiga 522-0242 (JP); SAOYA, Naoshi, Inukami-gun, Shiga 522-0242 (JP); UTSUNOMIYA, Hirofumi, Inukami-gun, Shiga 522-0242 (JP); KAMIYA, Kazutaka, Inukami-gun, Shiga 522-0242 (JP); HASEGAWA, Masahiro, Inukami-gun, Shiga 522-0242 (JP)
(74) Representative: Winter, Brandl - Partnerschaft mbB
(86) International application number: PCT/JP2024/027472
(87) International publication number: WO 2025/033306

(57) **Abstract**

Provided is a rotary connector device capable of reducing an occupied region in any direction with respect to a rotary shaft.

The present invention comprises: a cylindrical fixed body (121) in which, in plan view, within a partial region (A2) in the circumferential direction, the distance (1d1 to 1d3) from the center (O) of an arc is shorter than the radius (r) of a circle (21a) for which at least a portion (1B2) of another region is employed as the arc; a cylindrical rotating body (122) located inside of the fixed body (121), the rotating body (122) having a cylindrical outer peripheral surface concentric with the circle (21a) and being attached so as to be capable of rotating; and one or more flat cables (123a to 123c) accommodated in an accommodation space (S) between the inner peripheral surface of the fixed body (121) and the outer peripheral surface of the rotating body (122), the flat cables (123a to 123c) being wound around the rotating body (122). The flat cables (123a to 123c) have reverse parts (123Ra to 123Rc) for which the rotation direction reverses, the reverse parts (123Ra to 123Rc) being wound in one direction with respect to the rotating body (122) and wound in the other direction with respect to the fixed body (121). The reverse parts (123Ra to 123Rc) can move in accordance with the rotation of the rotating body (122).

## Description

### TECHNICAL FIELD

The present invention relates to a rotary connector device.

### BACKGROUND ART

Conventionally, in the steering equipped to an automobile, it is required to rotate from the neutral position about 2.5 revolutions either clockwise or counter clockwise.

Accompanying this, for the rotary connector device linking between the steering and the vehicle, it is required to rotate from the neutral position about 2.5 revolutions either clockwise or counter clockwise.

However, steer-by-wire, which is a system for controlling the tire angle by electrical signals without mechanically linking the steering and tires, has been given focus in recent years.

In steer-by-wire, the rotation number required in steering is about 0.5 to 0.8 revolutions from the neutral position either clockwise or counter clockwise.

For this reason, contrary to a rotary connector device applied to a system that mechanically links the steering and the tires, a rotary connector device addressing the steering revolution number reduction of steering-by-wire is desired.

For example, as an example of a multi-tape U-turn type rotary connector device, Patent Document 1 describes a relay device mainly including a cylindrical fixed member, a cylindrical rotating member on the inner side of the fixed member, and mounted rotatably, and a first flat cable, a second flat cable, a movement member, a first contact member and a second contact member arranged in an annular space formed between the fixed member and the rotating member.

In the relay device of Patent Document 1, the first flat cable is wound from the inner circumference of the space in a forward direction to an outer circumference of the space in a reverse direction, bordering on a first reversing portion at which the winding direction is reversed, and the second flat cable is wound from the inner circumference of the space in the opposite direction to the outer circumference of the space in the forward direction, bordering on the second reversing portion at which the winding direction reverses.

In addition, the movement member moves in the space in response to rotation of the rotating member.

The first contact member is arranged at the movement member, and when the rotating member rotates in the opposite direction, the first contact member causes the movement member to move in the opposite direction by contact with the first reversing portion due to the first flat cable being wound onto the inner circumference.

In addition, the second contact member is arranged at the movement member, and when the rotating member rotates in the forward direction, causes the movement member to move in the forward direction by contact with the second reversing portion due to the second flat cable being wound onto the inner circumference.

In the prior art of multi-tape U-turn type rotary connector devices including Patent Document 1, the annular space (housing space) for moving the flat cable in circles in a housing interior of the rotary connector device is provided uniformly or substantially uniformly over the entire circumference.

In other words, a predetermined outside diameter space is necessary relative to the rotation axis of the rotating body constituting the rotary connector device, and thus there has been a limitation to the design degrees of freedom of rotary connector devices.

For this reason, a predetermined region for the rotary connector device must be secured around the instrument panel of an automobile, particularly in the vicinity of the steering wheel.

### Citation List

### Patent Documents

Patent Document 1: Japanese Unexamined Patent Application, Publication No. 2021-190324

### DISCLOSURE OF THE INVENTION

### Problems to be Solved by the Invention

Therefore, the present invention has an object of providing a rotary connector device which can reduce the region secured for the rotary connector device in at least any direction relative to the rotation axis of the rotary connector device.

### Means for Solving the Problems

The above object is achieved by the follows modes (aspects) of the present invention.

Specifically, one mode of the present invention (first aspect) is the following <1> to <3>, another mode (second aspect) of the present invention is the following <4> to <7>, and yet another mode (third aspect) of the present invention is the following <8> to <14>.

<1> A rotary connector device includes: a fixed body which, in a partial region in a circumferential direction in a plan view, has an inner peripheral surface of tubular shape having a distance from a center of a circular arc that is shorter than a radius of a circle defining at least part of one other region as a circular arc;
   a rotating body of cylindrical shape mounted in a rotatable manner on an inner side of the fixed body, and having an outer peripheral surface of cylindrical shape which is concentric with the circle; and
   at least one flat cable housed in a housing space between the inner peripheral surface of the fixed body and the outer peripheral surface of the rotating body, and wound around the rotating body.
   in which
   the flat cable is wound in one direction relative to the rotating body and wound in another direction relative to the fixed body, and includes a reversing portion at which a rotation direction winding in one direction and a rotation direction winding in another direction reverse, and
   the reversing portion is movable in response to rotation of the rotating body.
<2> The rotary connector device as described in <1> further includes at least one dummy cable wound in one direction relative to the rotating body and wound in another direction relative to the fixed body together with the flat cable, and including a dummy cable reversing portion at which a rotation direction winding in one direction and a rotation direction winding in another direction reverse, the dummy cable reversing portion being movable in response to rotation of the rotating body.
<3> The rotary connector device as described in <1> further includes in the housing space:
   a ring portion that at least partially abuts an edge of the flat cable;
   a first rib provided in a standing manner from the ring portion so as to surround, in a circular arc shape, a region of the flat cable wound on the cylindrical portion of the rotating body;
   a column disposed on an inner side of the reversing portion of at least one flat cable among the flat cables, and having an axis fixed to freely rotate to the ring portion; and
   a second rib disposed on an outer side of the reversing portion where the column is disposed on an inner side thereto, the second rib being a circular arc shape following a circumferential surface of the column, and installed in a standing manner from the ring portion so as to interpose the flat cable and oppose the column.
<4> In the rotary connector device as described in <1>, a plurality of the flat cables are housed in the housing space in a laminated state, and
   among the plurality of the flat cables that are laminated, a flat cable laminated at a position most distanced relative to the outer peripheral surface of the rotating body and the inner peripheral surface of the fixed body is a high-rigidity flat cable having higher flexural rigidity than other among the plurality of the flat cables.
<5> In the rotary connector device as described in <4>, the high-rigidity flat cable includes a rigidity adding portion that adds rigidity.
<6> In the rotary connector device as described in <5>, the rigidity adding portion is a plate member adapted to be pasted to an outer surface of the flat cable.
<7> In the rotary connector device as described in <5>, the rigidity adding portion is covered by an insulator.
<8> The rotary connector device as described in <1> further includes one movement pressing portion provided in a movable manner to an inner side of the reversing portion of the flat cable,
   in which the movement pressing portion includes a cable pressing body that moves in the housing space while pressing a portion of the flat cable wound in one direction relative to the rotating body against the outer peripheral surface of the rotating body.
<9> In the rotary connector device as described in <8>, the rotating body further includes a plurality of inside tooth portions provided at one end side thereof along the circumferential direction of the rotating body,
   the fixed body further includes a plurality of outside tooth portions provided at one end side thereof along an extending direction of the fixed body,
   the cable pressing body further includes a plurality of tooth portions provided at one end side of the movement pressing portion, along the circumferential direction of the movement pressing portion, and
   the movement pressing portion of the cable pressing body moves by the tooth portions of the cable pressing body rotating while meshing with the inside tooth portions of the rotating body and the outside tooth portions of the fixed body in response to rotation of the rotating body.
<10> In the rotary connector device as described in <8>, the cable pressing body further includes a ring portion that supports the movement pressing portion, at least partial abuts an edge of the flat cable, and rotates in response to rotation of the rotating body, and
   the movement pressing portion of the cable pressing body moves by the ring portion of the cable pressing body rotating in response to rotation of the rotating body.
<11> In the rotary connector device as described in any one of <8> to <10>, the reversing portion moves in a movement space in which the outer peripheral surface of the rotating body and the inner peripheral surface of the fixed body are opposing in the other region of the circumferential direction, in response to rotation of the rotating body, and does not move in a constricting space in which the outer peripheral surface of the rotating body and the inner peripheral surface of the fixed body are opposing in the partial region of the circumferential direction.
<12> In the rotary connector device as described in any one of <8> to <10>, the flat cable is not wound on the inner peripheral surface of the fixed body in the partial region of the circumferential direction.
<13> In the rotary connector device as described in any one of <8> to <10>, the movement pressing portion of the cable pressing body does not move in a constricting space in which the outer peripheral surface of the rotating body and the inner peripheral surface of the fixed body are opposing in the partial region of the circumferential direction.
<14> The rotary connector device as described in any one of <8> to <10> further includes a dummy cable housed in the housing space between the rotating body and the fixed body, and wound from an outer side of the flat cable in one direction relative to the outer peripheral surface of the rotating body, and wound in another direction relative to the inner peripheral surface of the fixed body.

### Effects of the Invention

According to the present invention, it is possible to provide a rotary connector device which can reduce the region secured for the rotary connector device in at least any direction relative to the rotation axis of the rotary connector device.

### BRIEF DESCRIPTION OF THE DRAWINGS

FIG. 1 is a schematic cross-sectional view showing a rotary connector device according to Embodiment 1-1 which is an exemplary mode of a first aspect;
FIG. 2 is a schematic cross-sectional view showing an example of a conventional multi-tape U-turn type rotary connector device;
FIG. 3 is a schematic cross-sectional view for explaining movement of the rotary connector device according to Embodiment 1-1, which is a state turning a steering wheel to the left;
FIG. 4 is a schematic cross-sectional view for explaining movement of the rotary connector device according to Embodiment 1-1, which is a state turning a steering wheel to the right;
FIG. 5 is a schematic cross-sectional view showing a rotary connector device according to Embodiment 1-2 which is an exemplary mode of the first aspect;
FIG. 6 is a schematic cross-sectional view showing a rotary connector device according to Embodiment 1-3 which is an exemplary mode of the first aspect;
FIG. 7 is a schematic explanatory drawing showing the shape of an inner peripheral surface of a fixed body and a positional relationship between the fixed body and a rotating body, in the rotary connector device according to a modified example 1 of the first aspect;
FIG. 8 is a schematic explanatory drawing showing the shape of an inner peripheral surface of a fixed body and a positional relationship between the fixed body and a rotating body, in the rotary connector device according to a modified example 2 of the first aspect;
FIG. 9 is a partial transparent plan view showing an example of a rotary connector device according to Embodiment 2-1;
FIG. 10 is a partial transparent plan view showing a state of the rotary connector device of FIG. 9 when steering rotates 250 degrees counter clockwise;
FIG. 11 is a partial transparent plan view showing a state of the rotary connector device of FIG. 9 when steering rotates 250 degrees clockwise;
FIG. 12 is a partial transparent plan view showing an example of a rotary connector device according to Embodiment 2-2;
FIG. 13 is a partial transparent plan view showing an example viewing a rotary connector device according to Embodiment 3-1 from one side;
FIG. 14 is a partial transparent plan view showing an example viewing a rotary connector device according to Embodiment 3-1 from another side;
FIG. 15 is a partial transparent plan view showing a state of the rotary connector device of FIG. 14 when steering rotates 250 degrees counter clockwise;
FIG. 16 is a partial transparent plan view showing a state of the rotary connector device of FIG. 14 when steering rotates 250 degrees clockwise;
FIG. 17 is a partial transparent plan view showing an example viewing a rotary connector device according to Embodiment 3-2 from one side; and
FIG. 18 is a partial transparent plan view showing an example viewing a rotary connector device according to Embodiment 3-2 from another side.

### PREFERRED MODE FOR CARRYING OUT THE INVENTION

Hereinafter, a first aspect, a second aspect and a third aspect will be described in detail by giving the respective embodiments.

### <First Aspect>

A first aspect of the present invention is a rotary connector device including: a fixed body which, in a partial region in a circumferential direction in a plan view, has an inner peripheral surface of tubular shape having a distance from a center of a circular arc that is shorter than a radius of a circle defining at least part of one other region as a circular arc;
a rotating body of cylindrical shape mounted in a rotatable manner on an inner side of the fixed body, and having an outer peripheral surface of cylindrical shape which is concentric with the circle; and
at least one flat cable housed in a housing space between the inner peripheral surface of the fixed body and the outer peripheral surface of the rotating body, and wound around the rotating body.
in which
the flat cable is wound in one direction relative to the rotating body and wound in another direction relative to the fixed body, and includes a reversing portion at which a rotation direction winding in one direction and a rotation direction winding in another direction reverse, and
the reversing portion is movable in response to rotation of the rotating body.

The rotary connector device according to three embodiments ("Embodiment 1-1", "Embodiment 1-2" and "Embodiment 1-3") which are exemplary modes of the first aspect, as well as two modified examples ("Modified Example 1" and "Modified Example 2") will be specifically described while referencing the drawings.

It should be noted that a reference symbol with the lead starting with "1" is attached in each embodiment and modified example of the first aspect.

### Embodiment 1-1

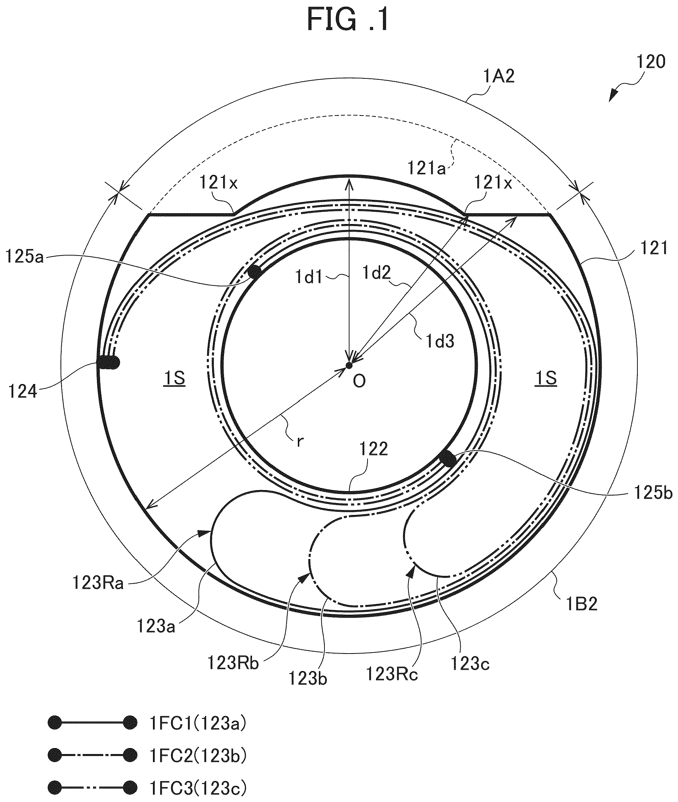

FIG. 1 is a schematic cross-sectional view showing a rotary connector device 120 according to Embodiment 1-1.

FIG. 1 is a cross-sectional view related to a cross section in a direction perpendicular to the rotation axis of the rotary connector device 120, in which a shape from viewing a fixed body 121 described later in a plane becomes apparent.

The rotary connector device 120 according to the present embodiment is of multi-tape U-turn type.

FIG. 1 shows at state in which the steering wheel is located at the neutral position.

As shown in FIG. 1, the rotary connector device 120 according to the present embodiment includes the fixed body 121, a rotating body 122, and three flat cables 123a, 123b and 123c (specifically, a first flat cable (1FC1) 123a, a second flat cable (1FC2) 123b and a third flat cable (1FC3) 123c).

It should be noted that, for the fixed body 121, mainly the shape of the inner peripheral surface of a tubular member is apparent in FIG. 1.

Although the outer peripheral surface of the fixed body 121 is a shape resembling the inner peripheral surface, there may be slight unevenness, protrusion of parts, a base belonging to a cylindrical member, and attached parts to other members such as the vehicle body.

Hereinafter, in the case of simply referring to "fixed body 121" in terms of shape, it shall indicate the shape of the inner peripheral surface of the tubular member unless otherwise specified.

In addition, for the rotating body 122, mainly the shape of the outer peripheral surface of a circular cylindrical member is apparent in FIG. 1.

In the rotating body 122, there may be attachment parts to other members such as a bearing belonging to a tubular member, a steering shaft, or the like.

Hereinafter, in the case of simply referring to the "rotating body 122" in terms of shape, it shall indicate the shape of the outer peripheral surface of a tubular member unless otherwise specified.

The rotary connector device 120 is a device equipped to an automobile, and electrically connects electronic equipment provided to the side of the fixed body 121 with electronic equipment provided to the side of the rotating body 122.

The fixed body 121 is fixed on a vehicle body side, and does not rotate with rotation of the steering (not shown).

On the other hand, the rotating body 122 rotates according to rotation of the steering (not shown).

The steering is mounted in a rotatable manner to the vehicle (not shown).

In the fixed body 121, the shape of the inner peripheral surface is tubular, and in a partial region A2 of the circumferential direction in a plan view, the distances 1d1, 1d2 and 1d3 from the center O of a circular arc are shorter than a radius r of the circle 21a establishing another region 1B2 as the circular arc.

In other words, in a plan view, the fixed body 121 is a shape in which the area of the region A2 is cut out relative to the perfect circle (circle 21a).

The shape of the partial region A2 of the fixed body 121 differs from the shape of the partial region A1 of the fixed body 111, in that it includes a step portion 121x.

For this reason, on the inner wall of the annular housing space S, the position corresponding to the step portion 121x is a corner.

The rotating body 122 is a circular cylindrical body which is mounted in a rotatable manner at an inner side of the fixed body 121, in a concentric circle with the circle 21a including the circular arc of the other region 1B1.

Between the inner peripheral surface of the fixed body 121 and the outer peripheral surface of the rotating body 122, an annular housing space 1S is formed.

The steering shaft (not shown) coupled to the steering (not shown) is provided in an inserted manner at the inner side of the rotating body 122.

In response to rotation of the steering, the steering shaft rotates around the rotation axis X, and in response to rotation of the steering shaft, the rotating body 122 rotates around a center point O relative to the fixed body 121.

The rotating body 122 rotates about 0.5 to 0.8 revolutions from the neutral position either clockwise or counter clockwise.

Even when the steering shaft rotates, the fixed body 121 does not rotate.

As shown in FIG. 1, flat cables 123a, 123b and 123c are housed in a housing space 1S, and are wound around the rotating body 122 to link between the fixed body 121 and the rotating body 122.

The flat cables 123a, 123b and 123c are wound in one direction relative to the rotating body 122 on the inner peripheral side, and wound in the other direction relative to the fixed body 121 on the outer peripheral side..

Herein, the flat cables 123a, 123b and 123c are wound clockwise relative to the rotating body 122, and wound counter clockwise relative to the fixed body 121.

End portions of the flat cables 123a, 123b and 123c on the outer peripheral side (fixed body 121 side) are connected to the fixed body 121 at the same fixed body connection portion 124.

On the other hand, end portions of the first flat cable 123a, and second and third flat cables 123b, 123c on the inner peripheral side (rotating body 122 side) are respectively connected to the rotating body 122 at rotating body connection portions 125a, 125b separated by 180 degrees in the circumferential direction.

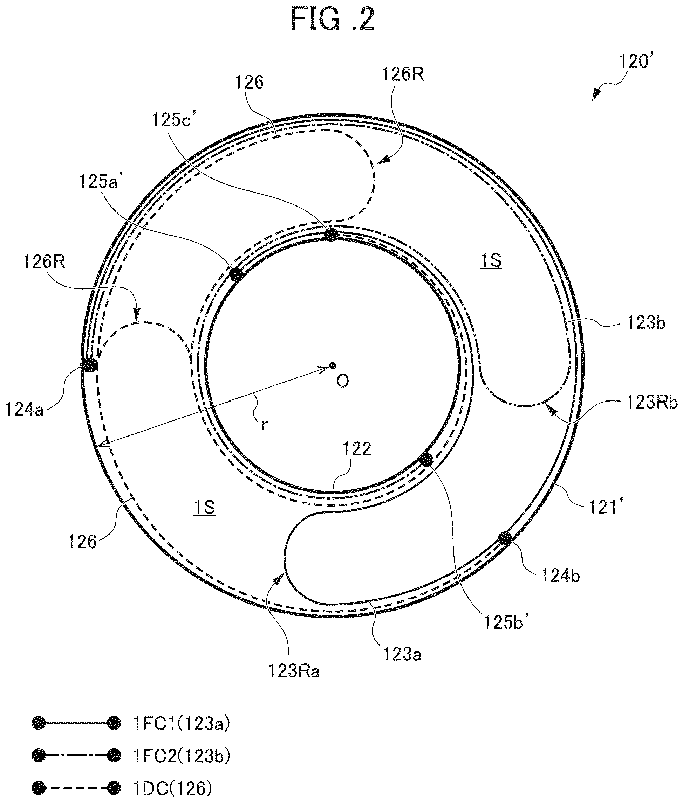

It should be noted that, actually, both ends of the flat cables 123a, 123b and 123c are connected to a connector (not shown); however, FIG. 1 expresses the connection portions schematically as the fixed body connection portion 124 and the rotating body connection portion 125 (same applies to FIGS. 2 to 6).

As shown in FIG. 1, the flat cables 123a, 123b and 123c include reversing portions 123Ra, 123Rb and 123Rc at which the rotation direction winding in one direction and the rotation direction winding in the other direction reverse.

The reversing portions 123Ra, 123Rb and 123Rc are so-called U-turn portions.

The reversing portions 123Ra, 123Rb and 123Rc are movable clockwise and counterclockwise according to the rotation of the rotating body 122.

When the steering shown in FIG. 1 is located at the neutral position, the reversing portion 123Rb of the second flat cable 123b is located roughly directly below the center point O (hereinafter, upon expressing the circumferential direction position, may be represented using an analog clock face. The main position is roughly the "6 o'clock position". Additionally, "roughly" is omitted hereafter).

Then, the reversing portion 123Ra of the first flat cable (1FC1) 123a and the reversing portion 123Rc of the third flat cable (1FC3) 123c are respectively located at relatively close positions before and after these ("7 o'clock position" and "5 o'clock position").

FIG. 2 shows an example of a conventional multi-tape U-turn type rotary connector device 120' in a schematic cross-sectional view.

It should be noted that, in FIG. 2, the same reference symbols as in FIG. 1 are attached to configurations and members having functions which are the same as for the rotary connector device 120 according to the present embodiment, and detailed descriptions thereof will be omitted.

The rotary connector device 120' according to the conventional example differs in the shape of a fixed body 121' from the rotary connector device 120 according to the present embodiment.

In other words, in the rotary connector device 120', as shown in FIG. 2, the shape of the fixed body 121' is circular in a plan view, and the housing space 1S is the same width in all directions in 360 degrees in a doughnut shape.

For this reason, a predetermined region for mounting the rotary connector device 120' must be secured around the instrument panel of an automobile, particularly in the vicinity of the steering wheel.

In addition, with the conventional multi-tape U-turn type rotary connector device 120', the two flat cables 123a, 123b and two dummy cables (1DC) 126 are housed in the housing space 1S.

Then, the reversing portion 123Ra of the first flat cable 123a, the reversing portion 123Rb of the second flat cable 123b, and a dummy cable reversing portion 126R of the two dummy cables (1DC) 126 are located in order at the "6 o'clock position", "3 o'clock position", "12 o'clock position" and "9 o'clock position".

Dummy cable (1DC) 126 is a member of only a sheet not including electrical wires.

In the multi-tape U-turn type rotary connector device 120', the dummy cable 126 pushes the flat cables 123a, 123b of the portion wound on the rotating body 122 against the rotating body 122, and is provided for suppressing the flat cables 123a and 123b floating up from the rotating body 122.

The action of the dummy cable 126 pushing the flat cables 123a, 123b to the rotating body 122 is exerted by the reaction of the dummy cable reversing portion 126R of the dummy cable 126 whereby the radius of curvature tries to increase.

With the rotary connector device 120 according to the present embodiment, as shown in FIG. 1, the shape of the fixed body 121 is a shape in which the area of a region A2 is cut out relative to the circle 21a.

For this reason, the housing space 1S becomes narrower in the area of the region A2, and it is possible to reduce the region secured for mounting the rotary connector device 120 by this much.

For example, when mounting the steering to the vehicle so that the area of the region A2 becomes at the top of the rotary connector device 120, it is possible to arrange other devices such as a monitor, various equipment and the like to the region cut out inside of the circle 21a.

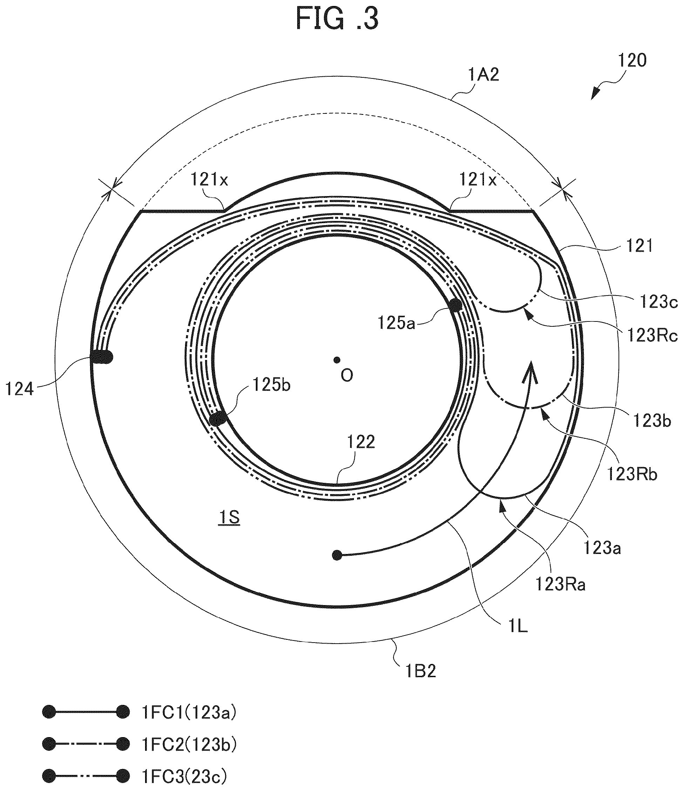

FIG. 3 shows a state of the rotary connector device 120 according to the present embodiment in which the steering wheel is turned to the left, and the rotating body 122 rotates counter clockwise.

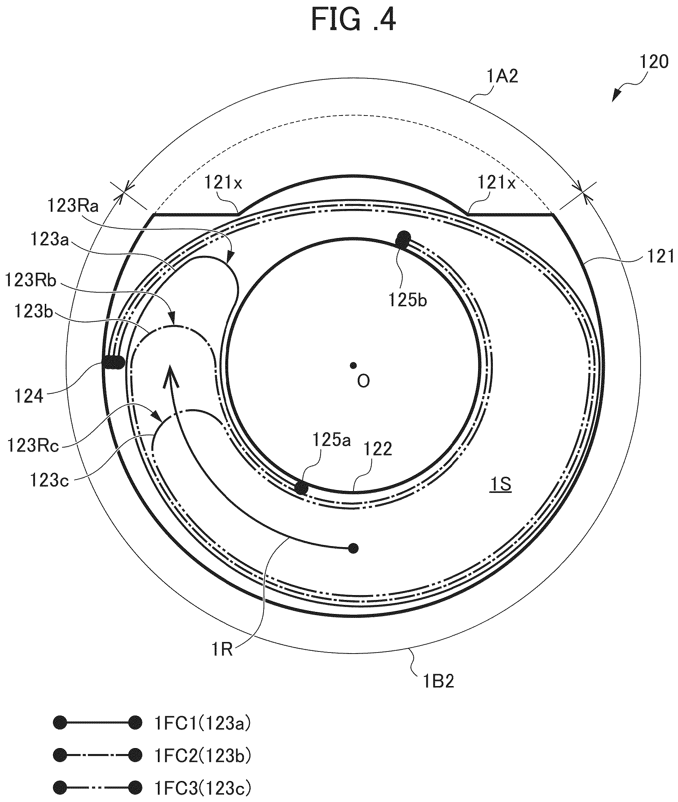

In addition, FIG. 4 shows a state of the rotary connector device 120 according to the present embodiment in which the steering wheel is turned to the right, and the rotating body 122 rotates clockwise.

Referring back to FIG. 3, when turning the steering wheel to the left, and the rotating body 122 of the rotary connector device 120 rotates counter clockwise, the reversing portions 123Ra, 123Rb and 123Rc move in the arrow 1L direction.

At this time, with the present embodiment, since rotation of the rotating body 122 is little at less than 1 revolution from the neutral position to both rotation directions, the movement of the reversing portions 123Ra, 123Rb and 123Rc is also small.

With the present embodiment, as shown in FIG. 3, the reversing portions 123Ra, 123Rb and 123Rc move roughly 90 degrees counter clockwise, and enter a state located in order at the "4 o'clock position", "3 o'clock position" and "2 o'clock position".

When this is done, since the reversing portion 123Rc of the third flat cable 123c approaches the area of region A2 in which the housing space 1S becomes narrower, under the influence thereof, the radius of curvature becomes somewhat smaller.

However, since the reversing portion 123Rc does not reach the area of the region A2 in which the housing space 1S becomes narrower, the load applied to the third flat cable 123c will not be large.

Conversely, due to the reaction force whereby the reduced radius of curvature of the reversing portion 123Rc of the third flat cable 123c tries to increase, since the action pushing the other flat cables 123a, 123b to the rotating body 122 acts, the flat cables 123a and 123b are suppressed from floating up from the rotating body 122.

On the other hand, referring back to FIG. 4, when turning the steering wheel to the right, and the rotating body 122 of the rotary connector device 120 rotates clockwise, the reversing portions 123Ra, 123Rb and 123Rc move in the arrow 1R direction.

At this time, similarly to FIG. 3 turning the steering wheel to the left, the movement of the reversing portions 123Ra, 123Rb and 123Rc is small.

In the present embodiment, as shown in FIG. 4, the reversing portions 123Ra, 123Rb and 123Rc move roughly 90 degrees clockwise, and enter a state located in order at the "10 o'clock position", "9 o'clock position" and "8 o'clock position".

When this is done, since the reversing portion 123Ra of the first flat cable 123a approaches the area of region A2 in which the housing space 1S becomes narrower, under the influence thereof, the curvature becomes somewhat smaller.

However, since the reversing portion 123Ra does not reach the area of the region A2 in which the housing space 1S becomes narrower, the load applied to the first flat cable 123a will not be large.

In the above way, in the present embodiment, even if there is a location where the housing space 1S narrows, since the movement of the reversing portions 123Ra, 123Rb and 123Rc is small, and is not affected much by this narrowing location, the load applied to the flat cables 123a, 123b and 123c will not be large.

For this reason, the influence on the durability of the flat cables 123a, 123b and 123c also will not be large.

In addition, the narrowing location of the housing space 1S makes the radius of curvature of the reversing portion 123Rc of part of the flat cables 123a, 123b and 123c smaller, the flat cables 123a and 123b are pushed by the reaction thereof and suppressed from floating up from the rotating body 122.

This effect contributes to an improvement in durability.

### Embodiment 1-2

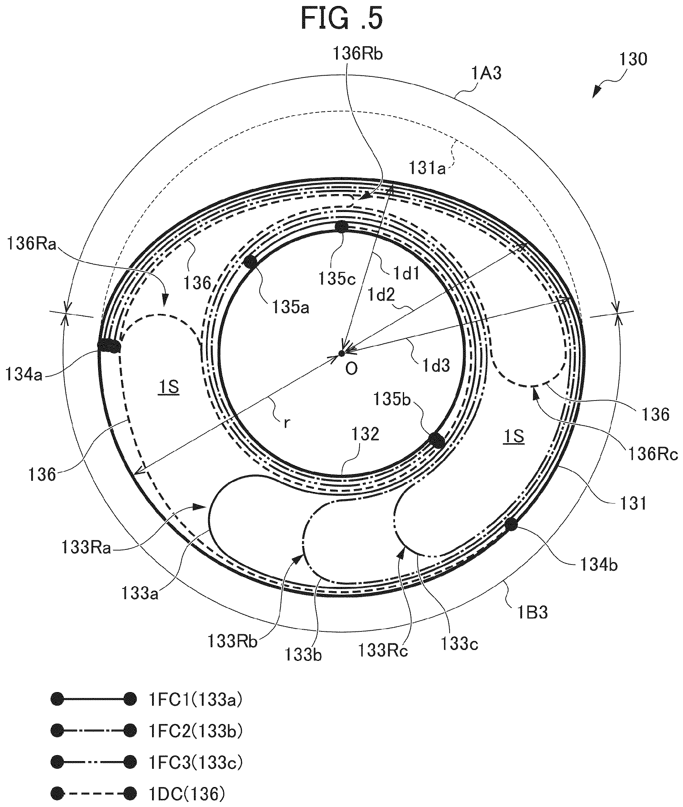

FIG. 5 is a schematic cross-sectional view showing a rotary connector device 130 according to Embodiment 1-2.

FIG. 5 is a cross-sectional view related to a cross section in a direction perpendicular to the rotation axis of the rotary connector device 130, in which a shape viewing a fixed body 131 described later in a plane becomes apparent.

The rotary connector device 130 according to the present embodiment is of multi-tape U-turn type, and is a modified example of the rotary connector device 120 according to Embodiment 1-1.

In FIG. 5 showing the rotary connector device 130 according to the present embodiment, to each member of a configuration similar or resembling the rotary connector device 120 according to Embodiment 1-1, reference numbers in which the ones digit and hundreds digit are the same as the respective members of the rotary connector device 120, and the tens digit is 30 are attached, whereby explanations for the shared configurations of each member will be omitted.

Hereinafter, the points of difference from Embodiment 1-1 are mainly described.

As shown in FIG. 5, the rotary connector device 130 according to the present embodiment includes a fixed body 131, a rotating body 132, three flat cables 133a, 133b and 133c (specifically a first flat cable (1FC1) 133a, second flat cable (1FC2) 133b and third flat cable (1FC3) 133c), and three dummy cables (1DC) 136.

The present embodiment differs from Embodiment 1-1 in the point of the shape of the fixed body 131 differing, and the point of additionally providing three dummy cables (1DC) 136.

The fixed body 131 is tubular, and in a plan view, in a partial region A3 in the circumferential direction, distances 1d1 and 1d2 from the center O of a circular arc are shorter than a radius r of the circle 31a establishing another region 1B3 as the circular arc.

In other words, the fixed body 131, in the plan view, makes a shape in which the area of the region A3 is cut out relative to the complete circle (circle 31a).

The three dummy cables 136 are wound in one direction relative to the rotating body 132 on the inner peripheral side together with the flat cables 133a, 133b and 133c, and wound in the other direction relative to the fixed body 131 on the outer peripheral side.

Herein, the three dummy cables 136 are wound clockwise relative to the rotating body 132, and wound counter clockwise relative to the fixed body 131.

The end portions of the three dummy cables 136 on the outer peripheral side (fixed body 131 side) are connected to the fixed body 131 at the same fixed body connection portion 134b.

This fixed body connection portion 134b is a separate connection portion independent from the fixed body connection portion 134a (corresponding to fixed body connection portion 124 in Embodiment 1-1) at which the end portions of the flat cables 133a, 133b and 133c on the outer peripheral side (fixed body 131 side) are connected.

On the other hand, the end portions of the three dummy cables 136 on the inner peripheral side (rotating body 132 side) are connected to the rotating body 132 at the same rotating body connection portion 135c.

This rotating body connection portion 135c is also a separate connection portion independent from the rotating body connection portions 135a and 135b (corresponding to rotating body connection portions 125a, 125b in Embodiment 1-1) at which the end portions of the flat cables 133a, 133b and 133c on the inner peripheral side (rotating body 132 side) are connected.

As shown in FIG. 5, the three dummy cables 136 respectively include dummy cable reversing portions 136Ra, 136Rb and 136Rc at which the rotation direction winding in one direction and the rotation direction winding in the other direction reverse.

The dummy cable reversing portions 136Ra, 136Rb and 136Rc are so-called U-turn portions.

The dummy cable reversing portions 136Ra, 136Rb and 136Rc are movable clockwise and counter clockwise in response to rotation of the rotating body 132.

When the steering shown in FIG. 5 is located at the neutral position, the dummy cable reversing portions 136Ra, 136Rb and 136Rc of the three dummy cables 136 are located in order at the "9 o'clock position", "12 o'clock position" and "3 o'clock position".

In the present embodiment, the reversing portions 123Ra, 123Rb and 123Rc of the flat cables 133a, 133b and 133c converge in the vicinity of the "6 o'clock position".

For this reason, from the "8 o'clock position" clockwise to the "4 o'clock position", when there is no specific mechanism as in the Embodiment 1-1, the flat cables 133a, 133b and 133c relatively easily float up from the rotating body 122.

In this region from the "8 o'clock position" clockwise to the "4 o'clock position", by providing the dummy cable reversing portions 136Ra, 136Rb and 136Rc of the three dummy cables 136 at effective intervals (about 90 degrees), the flat cables 133a, 133b and 133c are pushed to the rotating body 132, which suppresses the flat cables 133a, 133b and 133c from floating up.

Therefore, the rotary connector device 130 according to the present embodiment can suppress winding collapse of the flat cables 133a, 133b and 133c.

Even when turning the steering to the left or right, the reversing portions 123Ra, 123Rb and 123Rc of the flat cables 123a, 123b and 123c will not penetrate into the area of the region A3 in which the width of the housing space 1S narrows.

However, only the dummy cable reversing portion 136Rb of the middle dummy cable 136 among the three dummy cables 136 passes through the area of the region A3.

When the dummy cable reversing portion 136Rb of the middle dummy cable 136 passes through the region in which the width of the housing space 1S is narrow, the radius of curvature becomes very small.

However, the dummy cable 136 is a member of only a sheet not including electrical wires, even if load is applied, it will not affect the electrical circuit, and can withstand a higher load than the flat cables 133a, 133b and 133c.

In the above way, the rotary connector device 130 according to the present embodiment is superior in durability.

The housing space 1S narrows in the area of the region A3, and the effect of being able to reduce the region secured for mounting the rotary connector device 130 by this amount is exerted similarly to the rotary connector device 120 according to Embodiment 1-1.

The present embodiment gives an example providing three dummy cables; however, so long as providing at least one, the flat cable float prevention effect can be expected from this one dummy cable.

It should be noted that the shape of the fixed body is not limited to the shape of the fixed body 131 in the present embodiment; however, particularly in the case of the reversing portion of the dummy cable passing through the area of the region A3 in which the width of the housing space 1S narrows as in the present embodiment, it is preferable for the inner peripheral surface of this region to be smooth as in the present embodiment.

If having a step portion 121x as in the fixed body 121 of Embodiment 1-1, care must be taken since it becomes difficult for the reversing portion of the dummy cable to smoothly pass therethrough.

### Embodiment 1-3

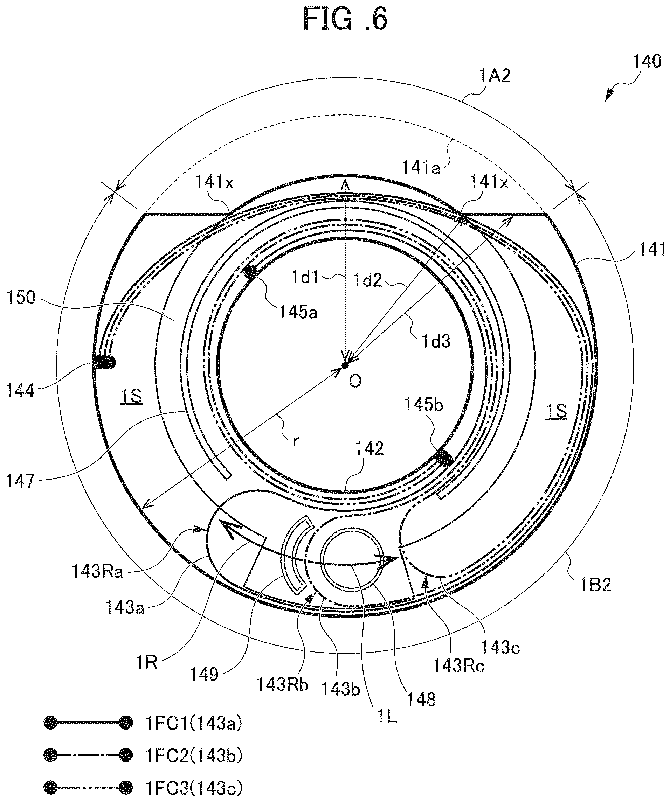

FIG. 6 is a schematic cross-sectional view showing a rotary connector device 140 according to Embodiment 1-3.

FIG. 6 is a cross-sectional view related to a cross section in a direction perpendicular to the rotation axis of the rotary connector device 140, in which a shape viewing a fixed body 141 described later in a plane becomes apparent.

The rotary connector device 140 according to the present embodiment is of multi-tape U-turn type, and is a modified example of the rotary connector device 120 according to Embodiment 1-1.

In FIG. 6 showing the rotary connector device 140 according to the present embodiment, to each member of a configuration similar or resembling the rotary connector device 120 according to Embodiment 1-1, reference numbers in which the ones digit and hundreds digit are the same as the respective members of the rotary connector device 120, and the tens digit is 40 are attached, whereby explanations for the shared configurations of each member will be omitted.

Hereinafter, the points of difference from Embodiment 1-1 are mainly described.

As shown in FIG. 6, the rotary connector device 140 according to the present embodiment includes a fixed body 141, a rotating body 142, three flat cables 143a, 143b and 143c (, a first flat cable (1FC1) 143a, second flat cable (1FC2) 143b and third flat cable (1FC3) 143c), a ring portion 150, a first rib (hereinafter called "first rib") 147, a column 148, and a second rib (hereinafter called "second rib") 149.

The present embodiment differs from Embodiment 1-1 in the point of additionally providing the ring portion 150, first rib 147, column 148 and second rib 149 to the housing space 1S.

The ring portion 150 is a ring-shaped plate member in which at least part abuts the edges of the flat cables 143a, 143b and 143c in the housing space 1S.

The ring portion 150 is arranged to surround the circumference of the rotating body 142.

A shape is made in which, based on the shape of a disk, the "6 o'clock position" and the vicinity in the circumferential direction thereof extend towards the fixed body 141.

The ring portion 150 comes to be able to rotate around the center point O independently from both the fixed body 141 and the rotating body 142.

The first rib 147 is a rib-shaped member installed in a standing manner from the ring portion 150 so as to surround the region wound on the rotating body 142 of the flat cables 143a, 143b and 143c in a circular arc shape.

The first rib 147 is arranged to oppose the circular cylindrical portion of the rotating body 142 via the flat cables 143a, 143b and 143c.

In the first rib 147, the standing height from the ring portion 150 is on the same order as the width of the flat cables 143a, 143b and 143c.

The column 148 is located on the inner side of the reversing portion 143Rb of the second flat cable 143b, and a shaft (not shown) is fixed to freely rotate to the ring portion 150.

For the column 148, the height in the axial direction from the ring portion 150 is on the same order as the width of the flat cables 143a, 143b and 143c.

The second rib 149 is located on the outer side of the reversing portion 143Rb of the second flat cable 143b to which the column 148 located on the inner side, and is a rib-shaped member that is a circular arc shape following the circumference of the column 148, and provided in a standing manner from the ring portion 150 so as to interpose the flat cable 143b and oppose the column 148.

For the second rib 149, the standing height from the ring portion 150 is on the same order as the width of the flat cables 143a, 143b and 143c.

The first rib 147, the column 148 and the second rib 149 provided to the ring portion 150 rotate together centered around the center point O.

In addition, the flat cables 143a, 143b and 143c move almost together centered around the center point O.

When turning the steering wheel to the left, and the rotating body 142 of the rotary connector device 140 rotates counter clockwise, the reversing portion 143Rb moves in the arrow 1L direction.

When this is done, the surface on the inner side of the reversing portion 143Rb of the second flat cable 143b abuts and wraps around the column 148 to draw out while rotating the column 148, and causes the ring portion 150 to rotate counter clockwise.

In other words, the reversing portion 143Rb of the second flat cable 143b and the ring portion 150 rotate together counter clockwise.

When this is done, the reversing portions 143Ra, 143Rb and 143Rc of the flat cables 143a, 143b and 143c, the first rib 147, the column 148 and the second rib 149 all rotate together counter clockwise.

In other words, their mutual positional relationships do not change.

On the other hand, when turning the steering wheel to the right and the rotating body 142 of the rotary connector device 140 rotates clockwise, the reversing portion 143Rb moves in the arrow 1R direction.

When this is done, the surface on the outer side of the reversing portion 143Rb of the second flat cable 143b abuts the second rib 149 and pushes while rubbing the inner peripheral surface of the arc of the second rib 149, thereby causing the ring portion 150 to rotate clockwise.

In other words, the reversing portion 143Rb of the second flat cable 143b and the ring portion 150 rotate together clockwise.

When this is done, the reversing portions 143Ra, 143Rb and 143Rc of the flat cables 143a, 143b and 143c, the first rib 147, the column 148 and the second rib 149 all rotate together clockwise.

In other words, their mutual positional relationships do not change.

The first rib 147 suppresses the flat cables 143a, 143b and 143c from floating up from the rotating body 142.

The column 148 and second rib 149 retain the shape of the reversing portion 143Rb of the second flat cable 143b.

By the shape of the reversing portion 143Rb of the middle second flat cable 143b being retained, the shapes of the reversing portions 143Ra and 143Rc of the first and third flat cables 143a and 143c at locations relatively close before and after this are also unlikely to collapse.

Consequently, the posture of the flat cables 143a, 143b and 143c is retained by the action of the first rib 147, column 148 and second rib 149.

Moreover, even if the rotating body 142 of the rotary connector device 140 rotates, since the positional relationship of related members will not change in the above way, the posture retention effect of the flat cables 143a, 143b and 143c is maintained.

Therefore, the rotary connector device 140 according to the present embodiment can suppress the winding collapse of the flat cables 143a, 143b and 143c.

In the above way, the rotary connector device 140 according to the present embodiment is superior in durability.

The housing space 1S narrows in the area of the region A2, and the effect of being able to reduce the region secured for mounting the rotary connector device 140 by this amount is exerted similarly to the rotary connector devices 120, 30 according to Embodiments 1-1 and 1-2.

It should be noted that, since the second flat cable 143b has high load in the reversing portion compared to the other first and third flat cables 143a and 143c, this can also be made to function as a dummy cable.

The above described three embodiments are merely illustrating examples of representative modes of a first aspect, and the first aspect is not limited to these embodiments.

For example, the above-mentioned embodiment gives an example providing three flat cables; however, the first aspect is not limited thereto, and it is not a problem if the number of flat cables is two or less, or four or more.

In addition, in the above-mentioned embodiment, the shape of the inner peripheral surface of the fixed body, in a plan view, becomes a combination in the circumferential direction of the circular arc-shaped regions (1B2, 1B3), and regions (A2, A3) having short distances (1d1, 1d2, 1d3) from the center O of this circular arc than the radius r of this circular arc; however, it is not limited to these shapes (parenthesis represent the reference numbers in the above-mentioned embodiment).

It is possible to adopt various shapes in the circumferential direction such as that sandwiching a region having a long distance from the center of the circular arc between the circular arc-shaped region, and the region having a shorter distance from the center of the circular arc than the radius of this circular arc.

In other words, in the first aspect, the shape of the inner peripheral surface of the fixed body is not limited to the shape of a tubular inner peripheral surface in a partial region of the circumferential direction in a plane view in which the distance from the center of a circular arc is shorter than the radius of a circle having another region as the circular arc, and is sufficient if a shape of a tubular inner peripheral surface having a shorter distance from the center of a circular arc than the radius of the circle establishing "at least part of" another region as the circular arc in a partial region in the circumferential direction.

In the first aspect, in the region in which the inner peripheral surface of the fixed body is a circular arc shape in a plan view, the distance between the outer peripheral surface of the rotating body and the inner peripheral surface of the fixed body is constant ("radius of inner peripheral surface of fixed body" - "radius of outer peripheral surface of rotating body") in the housing space between this outer peripheral surface of the rotating body having a circular cylindrical outer peripheral surface concentric with this circular arc and the inner peripheral surface of the fixed body.

In the housing space in which the distance between the outer peripheral surface of the rotating body and the inner peripheral surface of the fixed body is constant, the movement of the reversing portion of the flat cable is smooth, and the load on the flat cable is small.

On the other hand, in the first aspect, since the fixed body recedes (shaved) to the center side in a plan view, in a region in which the distance from the center of the circular arc is shorter than the radius of the region in which the inner peripheral surface of the fixed body is a circular arc shape in a plan view, it is possible to reduce the region secured for mounting the rotary connector device by this amount.

Therefore, in this receded (shaved) region, it is possible to secure space to arrange other members of the vehicle, equipment, etc.

Hereinafter, modified examples which are other modes of the first aspect having a different shape of the inner peripheral surface of the fixed body will be exemplified.

In the following modified examples, only the inner peripheral surface of the fixed body and the outer peripheral surface of the rotating body are illustrated, and the shape of the inner peripheral surface of the fixed body and the positional relationship between the fixed body and the rotating body will be described.

As a matter of course, the annular housing space 1S is formed between the inner peripheral surface of the fixed body and the outer peripheral surface of the rotating body, and at least one flat cable (not shown) wound in a U-turn manner around the rotating body is housed in this housing space S.

### Modified Example 1

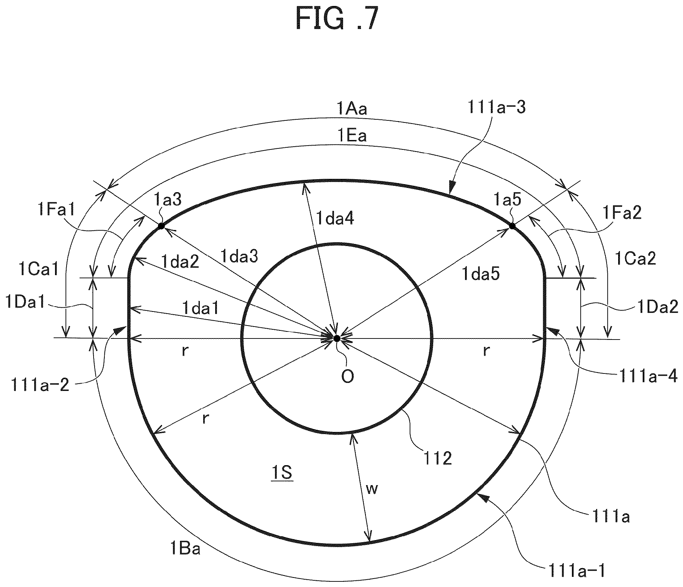

FIG. 7 is a schematic explanatory drawing showing the shape of the inner peripheral surface of a fixed body 111a and the positional relationship between the fixed body 111a and the rotating body 112, in a rotary connector device according to a modified example 1.

FIG. 7 is a cross-sectional view according to a cross section in a direction perpendicular to a rotation axis O of the rotating body 112, in which the shape from viewing the fixed body 111a and the rotating body 112 in a plane becomes apparent.

In the fixed body 111a of the modified example 1, the shape of the inner peripheral surface consists of a circular cylindrical portion 11a-1 which is a shape cutting out a portion of a predetermined central angle (specifically 180 degrees) from the entire circumference of the cylinder, an elliptical cylindrical portion 11a-3 which is a shape cutting out a portion of a predetermined central angle (specifically 180 degrees to the major axis side) from the entire circumference of the elliptical cylinder, and a pair of flat plate-shaped portions 11a-2 and 11a-4 linking the ends of both of these portions.

The regions in the circumferential direction include a region 1Ba in which the shape of the inner peripheral surface corresponds to the circular cylindrical portion 11a-1, the region 1Ea corresponding to the elliptical cylindrical portion 11a-3, and the pair of regions 1Da1 and 1Da2 corresponding to the pair of flat plate-shaped portions 11a-2 and 11a-4.

In the annular housing space S between the inner peripheral surface of the fixed body 111a and the outer peripheral surface of the rotating body 112, the distance w between the outer peripheral surface of the rotating body 112 and the inner peripheral surface of the fixed body 111a is constant in the region 1Ba.

Then, in the region 1Ba, the distance from the rotation axis O to the inner peripheral surface of the fixed body 111a becomes the radius r of the circle of the circular cylindrical portion 11a-1.

It should be noted that, in FIG. 7, the point a3 and the point a5 on the elliptical cylindrical portion 11a-3 are points at which the distances 1da3 and 1da5 between the respective points a3 and a5 and the rotation axis O equal the radius r (1da3 = 1da5 = r).

Therefore, as shown in FIG. 7, in the region 1Ea, the region Aa from the point a3 to the point a5 on the elliptical cylindrical portion 11a-3 has a distance 1da4 from the rotation axis O to the inner peripheral surface of the fixed body 111a smaller than the radius r (1da4 < r).

It should be noted that, in the present modified example and modified example 2 described later, when defining the range and expressing the size relationship with the radius r, the starting point and ending point of this range shall not be included (for example, for 1da4, it is not noted as 1da4 ≦ r, but rather as 1da4 < r).

In region 1Ea, the regions 1Fa1 and 1Fa2 from both ends thereof to point a3 or point a5 have a distance 1da2 from the rotation axis O to the inner peripheral surface of the fixed body 111a greater than the radius r (1da2 > r).

On the other hand, in the regions 1Da1 and 1Da2, the distance 1da1 from the rotation axis O to the inner peripheral surface of the fixed body 111a is greater than the radius r (1da1 > r).

In other words, the regions 1Ca1 and 1Ca2 located between the region 1Ba in which the distance from the rotation axis O to the inner peripheral surface of the fixed body 111a becomes the radius r of the circle of the circular cylindrical portion 11a-1, and the region AA in which the distance is smaller than the radius r (1da4 < r), have a larger distance 1da1, 1da2 from the rotation axis O to the inner peripheral surface of the fixed body 111a than the radius r (1da1 > r < 1da2).

As in the present modified example 1, even if including the regions 1Ca1 and 1Ca2 in which the distance from the rotation axis O to the inner peripheral surface of the fixed body 111a is larger than the radius r (1da1 > r < 1da2), so long as including the region Aa in which the distance is smaller than the radius r (1da4 < r), it is possible to secure space to arrange other members of the vehicle, equipment, etc. in this region.

### Modified Example 2

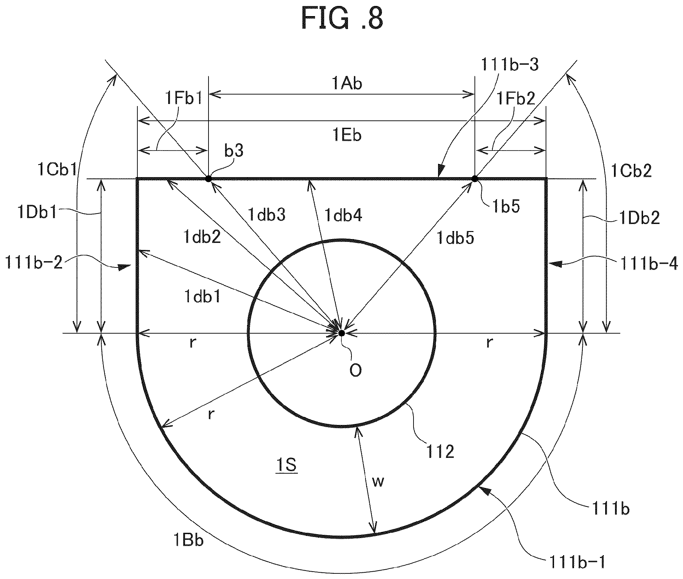

FIG. 8 is a schematic explanatory drawing showing the shape of the inner peripheral surface of a fixed body 111b and the positional relationship between the fixed body 111b and the rotating body 112, in a rotary connector device according to a modified example 2.

FIG. 8 is a cross-sectional view according to a cross section in a direction perpendicular to a rotation axis O of the rotating body 112, in which the shape from viewing the fixed body 111b and the rotating body 112 in a plane becomes apparent.

In the fixed body 111b of the modified example 2, the shape of the inner peripheral surface consists of a circular cylindrical portion 11b-1, and portions 11b-2, 11b-3 and 11b-4 corresponding to three lateral surfaces among four lateral surfaces which can constitute a rectangular parallelepiped.

The regions in the circumferential direction include a region 1Bb in which the shape of the inner peripheral surface corresponds to the circular cylindrical portion 11a-1, a region 1Eb corresponding to a lateral surface portion 11b-3 having a length corresponding to the diameter (2r) of the circular cylindrical portion 11a-1, and regions 1Db1 and 1Db2 corresponding to the pair of lateral surface portions 11b-2 and 11b-4 linking both end portions of the circular cylindrical portion 11a-1 and the lateral surface portion 11b-3.

In the annular housing space S between the inner peripheral surface of the fixed body 111b and the outer peripheral surface of the rotating body 112, the distance w between the outer peripheral surface of the rotating body 112 and the inner peripheral surface of the fixed body 111b is constant in the region 1Bb.

Then, in region 1Bb, the distance from the rotation axis O to the inner peripheral surface of the fixed body 111b is the radius r of the circle of the circular cylindrical portion 11b-1.

It should be noted that, in FIG. 8, the point b3 and the point b5 on the lateral surface portion 11b-3 are points at which the distances 1db3 and 1db5 respectively between the points b3 and b5 and the rotation axis O equal the radius r (1db3 = 1db5 = r).

Therefore, as shown in FIG. 8, in the region 1Eb, the region Ab from the point b3 to the point b5 on the lateral surface portion 11b-3 has a smaller distance 1db4 from the rotation axis O to the inner peripheral surface of the fixed body 111b than the radius r (1db4<r).

Then, in the region 1Eb, the regions 1Fb1 and 1Fb2 from both ends thereof respectively to the point b3 or the point b5 has a larger distance 1db2 from the rotation axis O to the inner peripheral surface of the fixed body 111b than the radius r (1db2 > r).

On the other hand, in the regions 1Db1 and 1Db2, the distance 1db1 from the rotation axis O to the inner peripheral surface of the fixed body 111b is larger than the radius r (1db1 > r).

In other words, in the regions 1Cb1 and 1Cb2 located between the region 1Bb in which the distance from the rotation axis O to the inner peripheral surface of the fixed body 111b is the radius r of the circle of the circular cylindrical portion 11b-1, and the region Ab in which the distance is smaller than the radius r (1db4 < r), the distances 1db1 and 1db2 from the rotation axis O to the inner peripheral surface of the fixed body 111b are larger than the radius r (1db1 > r < 1db2).

As in the present modified example 2, even if including the regions 1Cb1 and 1Cb2 in which the distance from the rotation axis O to the inner peripheral surface of the fixed body 111b is larger than the radius r (1db1 > r < 1db2), so long as including the region Ab in which the distance is smaller than the radius r (1db4<r), it is possible to secure space to arrange other members of the vehicle, equipment, etc. in this region.

The shapes of the fixed body in the above two modified example are ultimately only exemplifications, and in a partial region in the circumferential direction in a plan view, it is sufficient if including a tubular inner peripheral surface (elliptical cylindrical portion 11a-3 of modified example 1) in which the distance (1da4 of the same) from the center (O of the same) of a circular arc is shorter than the radius (r of the same) of the circle establishing a least part (region 1Ba of the same) of another region (region 1Ba + region 1Ca1 + region 1Ca2 of the same) as the circular arc (cylindrical portion 11a-1) (r > 1da4 of the same).

Additionally, a person skilled in the art following the conventional common knowledge could conduct various modifications thereto in a scope not departing from the gist of the first aspect.

Even with such modifications, so long as providing the configuration of the rotary connector device according to the first aspect, these modification are naturally also included in the category of the first aspect.

### <Second Aspect>

As in the first aspect, upon design changes to the configuration related to the housing space of the rotary connector device, the mechanism for suppressing the portion of the flat cable wound on the rotating body from floating from the rotating body (hereinafter also referred to as flat cable float) must be considered.

In the first aspect, mechanisms which can suppress flat cable float are exemplified in Embodiment 1-2 and Embodiment 1-3.

The object of the second aspect is to provide another rotary connector device which can suppress flat cable float along with achieving further compactness.

The second aspect is a rotary connector device according to the first aspect, in which there are a plurality of flat cables which are housed in the housing space, and housed in a laminated state.

It is a rotary connector device in which, among the laminated plurality of flat cables, the flat cable laminated at the most distanced position relative to the outer peripheral surface of the rotating body and the inner peripheral surface of the fixed body is a high-rigidity flat cable having higher flexural rigidity than the other flat cables.

In the first aspect, the "partial region" in the circumferential direction of the fixed body is called a "constricting outer wall portion" in the second aspect described below, and "other region" of the same is called an "outer wall portion" in the second aspect described below.

Therefore, "in a partial region in the circumferential direction, the distance from the center of the circular arc is shorter than the radius of the circle establishing at least part of the other region as the circular arc" in the first aspect is expressed as "the opposing distance between circular cylindrical portion and constricting outer wall portion is shorter than the opposing distance between the circular cylindrical portion and the outer wall portion" in the second aspect described below.

In addition, in the first aspect, the outer peripheral surface of the rotating body is considered to be a "circular cylindrical shape"; whereas, in the second aspect described below, the rotating body is considered to have a cylindrical portion.

However, in any case, the relationship between the circular cylindrical portion of the rotating body and other members (rotating body, flat cable, etc.) is defined, and there are no substantial differences between the two.

The present inventors have found, as a result of intensive study, that it is possible to further compact the rotary connector device, and suppress flat cable float within the rotary connector device, by establishing a part of the housing space housing the flat cable as a constricting space, and providing a movement pressing portion of a cable pressing body at a predetermined position relative to the flat cable, and based on such knowledge, have arrived at completion of the present disclosure according to the second aspect.

The rotary connector device of the embodiment according to the second aspect includes a rotating body having a cylindrical portion and is rotatable, a fixed body having an outer wall portion and a constricting outer wall portion arranged to oppose an outer surface of the cylindrical portion in which an opposing distance between the cylindrical portion and the constricting outer wall portion is shorter than an opposing distance between the cylindrical portion and the outer wall portion, and a plurality of flat cables housed in a laminated state in a housing space between the rotating body and the fixed body, and wound in one direction relative to the cylindrical portion of the rotating body and wound in another direction relative to the outer wall portion of the fixed body, and including a reversing portion at which a rotation direction winding in one direction and a rotation direction winding in another direction reverse, in which a flat cable laminated at a position most distanced relative to the cylindrical portion and the outer wall portion among the plurality of flat cables that are laminated is a high-rigidity flat cable having higher flexural rigidity than other flat cables.

The rotary connector device according to two embodiments ("Embodiment 2-1" and "Embodiment 2-2") which are exemplary modes of the second aspect will be specifically described while referencing the drawings.

It should be noted that a reference symbol with the lead starting with "2" is attached in each embodiment of the second aspect.

### Embodiment 2-1

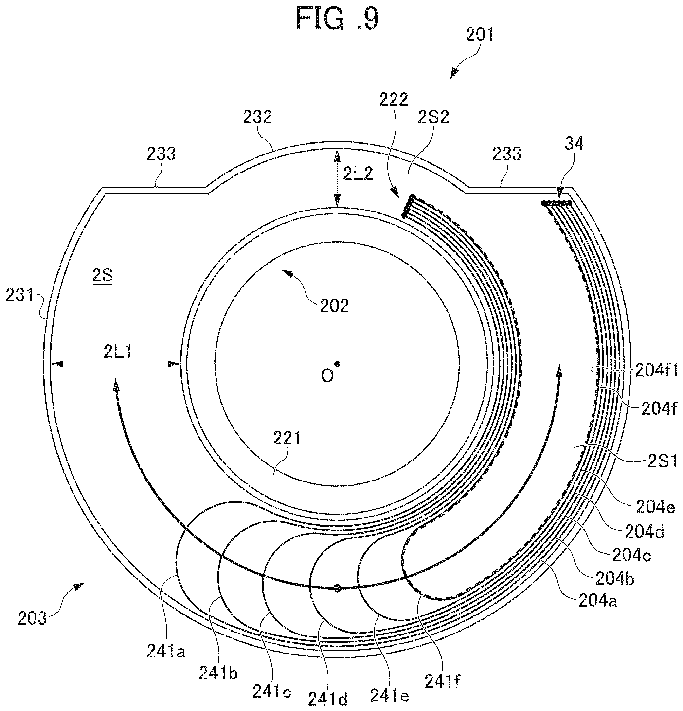

FIG. 9 is a partial transparent plan view showing an example of a rotary connector device according to Embodiment 2-1.

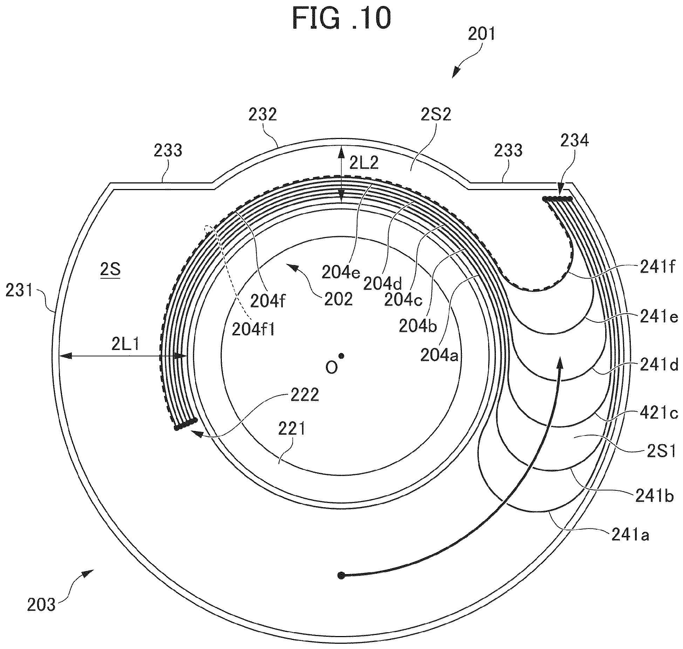

FIG. 10 is a partial transparent plan view showing a state of the rotary connector device of FIG. 9 when steering (not shown) rotates 250 degrees counter clockwise.

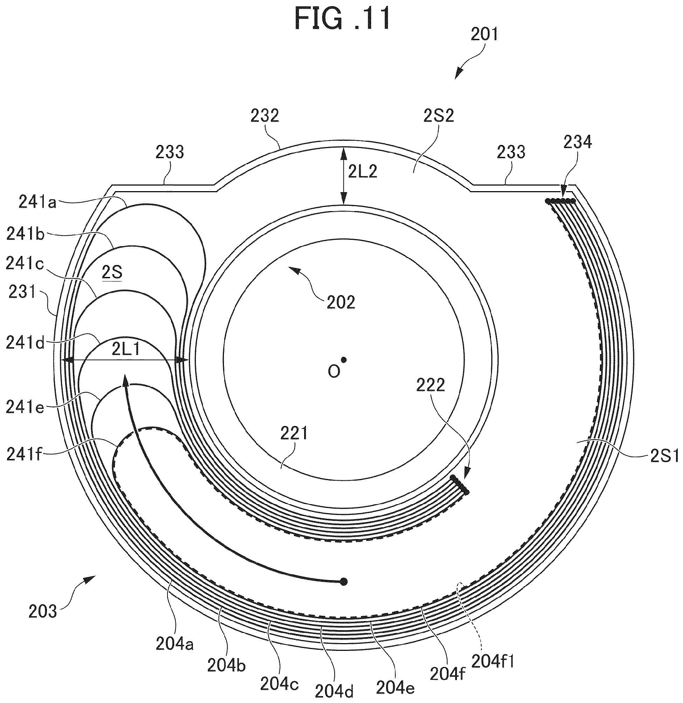

FIG. 9 is a partial transparent plan view showing a state of the rotary connector device of FIG. 11 when steering rotates 250 degrees clockwise.

FIGS. 9 to 13 and later drawings, for convenience, show a state in which a top plate, which is coupled vertically to the cylindrical portion 221 of the rotating body 202 as well as the outer wall portion 231 and constricting outer wall portion 232 of the fixed body 203, and forms a housing space 2S together with the rotating body 202 and the fixed body 203, is transparent.

As shown in FIG. 9, the rotary connector device 201 of Embodiment 2-1 includes the rotating body 202, the fixed body 203, and the plurality of flat cables 204a, 204b, 204c, 204d, 204e and 204f (hereinafter noted as 204a to 204f).

The rotary connector device 201 is equipped to an automobile, and electrically connects electrical equipment (not shown) provided on the rotating body 202 side with electrical equipment (not shown) provided on the fixed body 203 side.

The rotating body 202 rotates according to rotation of the steering (not shown), and the fixed body 203 does not rotate according to rotation of the steering.

The steering is equipped in a rotatable manner to the vehicle (not shown).

The rotating body 202 constituting the rotary connector device 201 includes the cylindrical portion 221, and is mounted in a rotatable manner to an inner side of the fixed body 203.

The cylindrical portion 221 forms a lateral wall on the inner side of the rotary connector device 201.

A steering shaft (not shown) coupled to the steering (not shown) is provided in an inserted manner at the inner side of the cylindrical portion 221.

In response to rotation of the steering, the steering shaft rotates around the rotation axis O, and in response to rotation of the steering shaft, the rotating body 202 rotates around a rotation axis O relative to the fixed body 203.

The rotating body 202 rotates less than 1 revolution, preferably about 0.5 to 0.8 revolutions, from the neutral position either clockwise or counter clockwise.

Even when the steering shaft rotates, the fixed body 203 does not rotate.

The fixed body 203 includes the outer wall portion 231 and the constricting outer wall portion 232.

Each of the outer wall portion 231 and the constricting outer wall portion 232 extends along the circumferential direction of the cylindrical portion 221 of the rotating body 202, and is arranged opposing the outer surface of the cylindrical portion 221.

The outer wall portion 231 and the constricting outer wall portion 232 form a lateral wall on the outer side of the rotary connector device 201.

As shown in FIG. 9, the opposing distance 2L2 between the outer surface of the cylindrical portion 221 and the inner surface of the constricting outer wall portion 232 (hereinafter also referred to as second opposing distance 2L2) is shorter than the opposing distance 2L1 between the outer surface of the cylindrical portion 221 and the inner surface of the outer wall portion 231 (hereinafter also referred to as first opposing distance 2L1).

In the housing space 2S, the region in which the outer surface of the cylindrical portion 221 and the inner surface of the outer wall portion 231 are opposing is a non-annular movement space 2S1, and a region in which the outer surface of the cylindrical portion 221 and the inner surface of the constricting outer wall portion 232 are opposing is a non-annular constricting space 2S2.

For example, as shown in FIG. 9, the movement space 2S1 is a circular arc shape, and the constricting space 2S2 is a circular arc shape.

Due to the second opposing distance 2L2 being shorter than the first opposing distance 2L1, centered on the central axis O, the length in the radial direction of the constricting space 2S2 is shorter than the length in the radial direction of the movement space 2S1, i.e. the width of the constricting space 2S2 is smaller than the width of the movement space 2S1.

Herein, although an example in which the outer wall portion 231 and the constricting outer wall portion 232 are coupled via two flat-plate shaped coupling portions 233, the coupling state between the outer wall portion 231 and the constricting outer wall portion 232 is not particularly limited.

For example, the coupling portion 233 may be a curved plate shape, or the outer wall portion 231 and the constricting outer wall portion 232 may couple directly without going through the coupling portion 233.

In addition, with the conventional rotary connector device, since the rotating body rotates at least one revolution either clockwise or counter clockwise, it is necessary for the width of the annular housing space to be uniform or substantially uniform over the entire circumference to the extent that constituent members such as the reversing portion described later of each of the plurality of flat cables 204a to 204f is moveable over the entire circumference of the housing space.

On the other hand, with the rotary connector device 201, since the rotating body 202 rotates less than one revolution either clockwise or counter clockwise, i.e. does not rotate more than one revolution, the constituent members such as the reversing portion of each of the plurality of flat cables 204a to 204f do not move over the entire circumference of the housing space 2S, but rather move in part of the housing space 2S, i.e. the movement space 2S1.

In the region of the housing space 2S in which the constituent members such as the reversing portion of each of the plurality of flat cables 204a to 204f do not move, since a width on the same order as the movement space 2S1 becomes unnecessary, the fixed body 203 can include the constricting outer wall portion 232 for forming the constricting space 2S2 having a narrower width than the movement space 2S1.

As a result, compared to a conventional rotary connector device, it is possible to further the compactness of the rotary connector device 201.

In the case of equipping the conventional rotary connector device to an automobile, although a predetermined space is necessary over the entire circumference relative to the rotation center of the rotating body, the rotary connector device 201 can be equipped even without a space in a predetermined direction, e.g., upwards, relative to the rotation center.

In this way, the degrees of freedom in design of the rotary connector device 201 improve.

As shown in FIG. 9, in the housing space 2S between the rotating body 202 and the fixed body 203, the plurality of flat cables 204a to 204f are housed.

The plurality of flat cables 204a to 204f respectively include a conductor transmitting electric power or electrical signals, and an insulator covering the conductor.

Herein, the six flat cables 204a to 204f are housed; however, the number of flat cables is not particularly limited so long as being 2 or more.

The plurality of flat cables 204a to 204f are wound in one direction relative to the outer surface of the cylindrical portion 221, and wound in the other direction relative to the inner surface of the outer wall portion 231 in a laminated state.

Herein, as shown in FIG. 9, the plurality of flat cables 204a to 204f are wound clockwise relative to the outer surface of the cylindrical portion 221 and wound counter clockwise relative to the inner surface of the outer wall portion 231.

In addition, the plurality of flat cables 204a to 204f are not wound on the inner surface of the constricting outer wall portion 232.

The outer wall portion 231 of the fixed body 203 is a portion in which the plurality of flat cables 204a to 204f wound in one direction relative to the cylindrical portion 221 of the rotating body 202 are wound in the other direction.

In addition, the constricting outer wall portion 232 of the fixed body 203 is a portion in which the plurality of flat cables 204a to 204f wound in one direction relative to the cylindrical portion 221 of the rotating body 202 are not wound in the other direction.

In this way, the plurality of flat cables 204a to 204f wound in one direction relative to the cylindrical portion 221 of the rotating body 202 are wound on the outer wall portion 231, but not wound on the constricting outer wall portion 232.

In addition, the outer wall portion 231 is not arranged opposing the entire circumference of the cylindrical portion 221 of the rotating body 202 over the circumferential direction, is a circular arc shape, and is arranged opposing only part of the cylindrical portion 221 over the circumferential direction.

In addition, the constricting outer wall portion 232 is not arranged opposing the entire circumference of the cylindrical portion 221 over the circumferential direction, is a circular arc shape, and is arranged opposing only part of the cylindrical portion 221, i.e. at least part of a portion of the cylindrical portion 221 excluding a portion opposing with the outer wall portion 231, over the circumferential direction.

Centered around the central axis O, the length dimension in the radial direction of the constricting outer wall portion 232 is small compared to the length dimension in the radial direction of the outer wall portion 231.

In addition, the plurality of flat cables 204a to 204f respectively include reversing portions 241a, 241b, 241c, 241d, 241e and 241f (hereinafter noted as 241a to 241f) at which the rotation direction winding in one direction and the rotation direction winding in the other direction reverse.

The reversing portions 241a to 241f are so-called U-turn portions.

As shown in FIG. 10 and FIG. 11, the reversing portions 241a to 241f of the plurality of flat cables 204a to 204f move clockwise and counter clockwise in the movement space 2S1 in which the cylindrical portion 221 of the rotating body 202 and the outer wall portion 231 of the fixed body 203 are opposing in response to rotation of the rotating body 202, while not moving in the constricting space 2S2 in which the cylindrical portion 221 of the rotating body 202 and the constricting outer wall portion 232 of the fixed body 203 are opposing.

In this way, the reversing portions 241a to 241f of the plurality of flat cables 204a to 204f are housed in the movement space 2S1 of the housing space 2S.

Assuming that the reversing portions 241a to 241f move in the constricting space 2S2, the curvature of the reversing portions 241a to 241f when moving in the constricting space 2S2 would become large compared to the curvature of the reversing portions 241a to 241f when moving in the movement space 2S1.

For this reason, the durability performance of the plurality of flat cables 204a to 204f declines accompanying an increase in curvature of the reversing portion 241, and it becomes difficult to use the rotary connector device 201 over a long period.

In addition, the end portion on the inner peripheral side which is one end of each of the plurality of flat cables 204a to 204f includes a connector (not shown), and is connected to a rotating body connection portion 222 of the rotating body 202.

In addition, the end portion on the outer peripheral side which is the other end of the plurality of flat cables 204a to 204f includes a connector (not shown), and is connected to a fixed body connection portion 234 of the fixed body 203.

For example, the fixed body connection portion 234 is provided within the movement space 2S1.

According to such a configuration, the rotating body connection portion 222 relatively moves in relation to the fixed body connection portion 234 in response to rotation of the rotating body 202, and the plurality of flat cables 204a to 204f are wound onto the cylindrical portion 221 of the rotating body 202 or unwound from the cylindrical portion 221, and thus the reversing portions 241a to 241f of the plurality of flat cables 204a to 204f move in response to rotation of the rotating body 202.

The connector (not shown) provided to the end portion of the plurality of flat cables 204a to 204f connected to the rotating body connection portion 222 electrically connects with various electrical equipment such as the airbag device equipped on the steering side.

In addition, the connector (not shown) provided to the end portion of the plurality of flat cables 204a to 204f connected to the fixed body connection portion 234 electrically connects with various electrical equipment such as vehicle control devices equipped on the vehicle side.

Then, the various electrical equipment on the vehicle side and the various electrical equipment on the steering side are electrically connected mutually via the plurality of flat cables 204a to 204f of the rotary connector device 201.

In addition, among the plurality of flat cables 204a to 204f, the flat cable 204f laminated at the most distant position relative to the cylindrical portion 221 of the rotating body 202 and the outer wall portion 231 of the fixed body 203 is a high-rigidity flat cable having higher flexural rigidity than the other flat cables 204a, 204b, 204c, 204d and 204e (hereafter noted as 204a to 204e).

The flat cable 204f serving as the high-rigidity flat cable includes a rigidity adding portion 204f1 for adding rigidity to the flat cable 204f.

The rigidity adding portion 204f1 is a plate member capable of pasting to the outer surface of the flat cable 204f.

The rigidity adding portion 204f1 is formed in a size covering the entirety of the width direction and extending direction of one side of the flat cable 204f.

The rigidity adding portion 204f1 is a metal plate such as stainless steel with a thickness of 10 µm, for example.

With the rotary connector device 201 configured in the above way, the restoring force of the rigidity adding portion 204f1 acts in a direction for the shape to be straight on, among the plurality of flat cables 204a to 204f housed in the movement space 2S1, the flat cable 204f laminated at the most distant position relative to the cylindrical portion 221 of the rotating body 202 and the outer wall portion 231 of the fixed body 203.

Thereby, in the movement space 2S1, the flat cable 204f, bordering on the reversing portion 241f, imparts a force in a direction in which one side in the extending direction abuts the cylindrical portion 221 of the rotating body 202, and imparts a force in the direction in which the other side in the extending direction abuts the outer wall portion 231 of the fixed body 203.

For this reason, the other flat cables 204a to 204e housed in the housing space 2S1 each enter a state pressed against the cylindrical portion 221 of the rotating body 202 and the outer wall portion 231 of the fixed body 203 by the flat cable 204f on which the restoring force of the rigidity adding portion 204f1 acts.

Thereby, for each of the plurality of flat cables 204a to 204f, winding looseness of the portion wound on the cylindrical portion 221 is reduced, and floating from the cylindrical portion 221 is suppressed.

In the above-mentioned way, with the rotary connector device 201, since the fixed body 203 includes the constricting outer wall portion 232 in order to form within the rotary connector device 201 the constricting space 2S2 in which the width of the housing space 2S is narrow, it is possible to increase the ellipticity of the transverse sectional shape of the steering column applied to the rotary connector device 201.

Since a steering column having such a flat shape can be suitably used in irregular steering, the rotary connector device 201 can be suitably used in steer-by-wire.

Such steering is suitable for retracting steering which can be stored in a dashboard.

In addition, when the steering column is a flat shape, the gauge panel (so-called instrument panel) located above the steering column becomes easy to see while driving, and the space below the steering column expands, whereby there are advantages such as being able to widen the legroom of the driver's seat.

For this reason, the degrees of design freedom of the vehicle including the rotary connector device 201 further improve.

According to the above described Embodiment 2-1, by establishing a part of the housing space housing the flat cables as a constricting space, and establishing the flat cable 204f laminated at the most distanced position relative to the cylindrical portion 221 of the rotating body 202 and the outer wall portion 231 of the fixed body 203 among the plurality of flat cables 204a to 204f as a high-rigidity flat cable having higher flexural rigidity than the other flat cables 204a to 204e, the rotary connector device achieve further compactness, as well as being able to suppress flat cable float.

### Embodiment 2-2

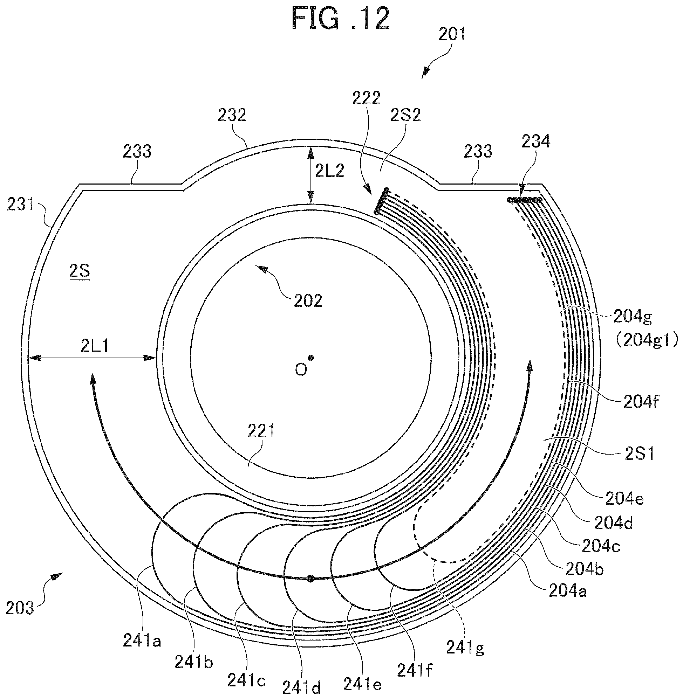

FIG. 12 is a partial transparent plan view showing an example of a rotary connector device of Embodiment 2-2.

It should be noted that, in the embodiments illustrated below, the same reference numbers are attached to constituent portions that are identical to the rotary connector device 201 of Embodiment 2-1, and redundant explanations will be omitted or simplified.

The rotary connector device 201a of Embodiment 2-2 is basically the same configuration as the rotary connector device 201 of Embodiment 2-1 other than the flat cable 204f not being equipped with the rigidity adding portion 204f1, and having a flat cable 204g laminated on the flat cable 204f, and having higher flexural rigidity than the plurality of flat cables 204a to 204f.

For this reason, mainly the differing configurations thereof will be described herein.

As shown in FIG. 12, in the rotary connector device 201a of Embodiment 2-2, the flat cable 204f is not equipped with the rigidity adding portion 204f1.

In addition, the rotary connector device 201a includes, in addition to the plurality of flat cables 204a to 204f, the flat cable 204g which is laminated at the most distanced position relative to the cylindrical portion 221 of the rotating body 202 and the outer wall portion 231 of the fixed body 203, and serving as the high-rigidity flat cable having higher flexural rigidity than the plurality of flat cables 204a to 204f.

The flat cable 204g is formed in a similar shape and size as the other flat cables 204a to 204f.

The flat cable 204g includes a plate-shaped or wire-shaped rigidity adding portion 204g1 made of a metal such as stainless steel.

The rigidity adding portion 204g1 is covered by an insulator.

The flat cable 204g may include a conductor that transfers electric power or electrical signals, as well as the rigidity adding portion 204g1.

In addition, the flat cable 204g may be formed from only the rigidity adding portion 204g1 without the insulator.

The flat cable 204g is laminated adjacent to the flat cable 204f, and similarly to the other flat cables 204a to 204f, is wound in one direction relative to the outer surface of the cylindrical portion 221 of the rotating body 202, and is wound in the other direction relative to the inner surface of the outer wall portion 231 of the fixed body 203.

The flat cable 204g, similarly to the other flat cables 204a to 204f, includes the reversing portion 241g at which the rotation direction winding in one direction and the rotation direction winding in the other direction reverse.

The reversing portion 241g of the flat cable 204g moves clockwise or counter clockwise in the movement space 2S1 in response to rotation of the rotating body 202, while not moving in the constricting space 2S2.

The flat cable 204g, bordering on the reversing portion 241g, pushes the other flat cables 204a to 204f wound on the cylindrical portion 221 from the outer side against the cylindrical portion 221 of the rotating body 202, and pushes portions of the other flat cables 204a to 204f wound on the outer wall portion 231 from the outer side against the outer wall portion 231 of the fixed body 203.

The end portion on the inner peripheral side which is one end of the flat cable 204g is connected to the rotating body connection portion 222 of the rotating body 202.

In addition, the end portion on the outer peripheral side which is the other end of the flat cable 204g is connected to the fixed body connection portion 234 of the fixed body 203.

According to such a configuration, the rotating body connection portion 222 relatively moves in relation to the fixed body connection portion 234 in response to rotation of the rotating body 202, and the flat cable 204g is wound onto the cylindrical portion 221 of the rotating body 202 or unwound from the cylindrical portion 221, and thus the reversing portion 241g of flat cable 204g moves in response to rotation of the rotating body 202.

With the rotary connector device 201a configured in the above way, the restoring force of the rigidity adding portion 204g1 acts in a direction to make the shape straight on the flat cable 204g, which is laminated at the most distanced position relative to the cylindrical portion 221 of the rotating body 202 and the outer wall portion 231 of the fixed body 203 among the plurality of flat cables 204a to 204g housed in the movement space 2S1.

Thereby, in the movement space 2S1, bordering on the reversing portion 241g, the flat cable 204g imparts a force in a direction in which one side in the extending direction abuts the cylindrical portion 221 of the rotating body 202, and imparts a force in the direction in which the other side in the extending direction abuts the outer wall portion 231 of the fixed body 203.

For this reason, the other flat cables 204a to 204f housed in the housing space 2S1 respectively enter a state pushed against the cylindrical portion 221 of the rotating body 202 and the outer wall portion 231 of the fixed body 203 by the flat cable 204g on which the restoring force of the rigidity adding portion 204g1 acts.

For each of the plurality of flat cables 204a to 204g, winding looseness of the portion wound on the cylindrical portion 221 is thereby reduced, and floating from the cylindrical portion 221 is suppressed.

According to the above described Embodiment 2-2, even if including the flat cable 204g in which the rigidity adding portion 204g1 is arranged inside, in place of the rigidity adding portion 204f1 provided to the flat cable 204f, the rotary connector device achieve further compactness, as well as being able to suppress flat cable float.

Although embodiments of a second aspect have been described above, the second aspect is not to be limited to the above embodiments, and includes every mode encompassed by the concept and claims of the present disclosure, and can be modified in various ways within the scope of the present disclosure.

<Third Aspect>

As in the first aspect, upon design changes to the configuration related to the housing space of the rotary connector device, the mechanism for suppressing flat cable float must be considered.

In the first aspect, mechanisms which can suppress flat cable float are exemplified in Embodiment 1-2 and Embodiment 1-3.

The object of the third aspect is to provide yet another rotary connector device which can suppress flat cable float along with achieving further compactness.

The third aspect is a rotary connector device according to the first aspect, including one movement pressing portion provided to be movable at an inner side of the reversing portion of the flat cable,
in which the movement pressing portion includes a cable pressing body that moves in the housing space while pressing a portion of the flat cable wound in one direction relative to the rotating body against the outer peripheral surface of the rotating body, in response to rotation of the rotating body.

In the first aspect, "partial region" in the circumferential direction of the fixed body is called a "constricting outer wall portion" in the third aspect described below, and "other region" of the same is called an "outer wall portion" in the third aspect described below.

Therefore, "in a partial region in the circumferential direction, the distance from the center of the circular arc is shorter than the radius of the circle establishing at least part of the other region as the circular arc" in the first aspect is expressed as "opposing distance between circular cylindrical portion and constricting outer wall portion is shorter than opposing distance between circular cylindrical portion and outer wall portion" in the third aspect described below.

In addition, in the first aspect, the outer peripheral surface of the rotating body is considered to be a "circular cylindrical shape"; whereas, in the third aspect described below, the rotating body is considered to have a cylindrical portion.

However, in any case, the relationship between the circular cylindrical portion of the rotating body and other members (rotating body, flat cable, etc.) is defined, and there are no substantial differences between the two.

Furthermore, a "cable pressing body" in the third aspect described below (particularly the "movement pressing portion 51" in the following embodiment) is a member resembling the "column" in Embodiment 1-3 of the first aspect; however, they differ in the point that the former is a member moving in the housing space actively by a tooth portion meshing with an inside tooth portion provided to the rotating body; whereas, the latter is a member that rotates in connection with movement of the reversing portion of the flat cable.

The present inventors found that the rotary connector device can be made more compact, and flat cable float within the rotary connector device can be suppressed by establishing a part of the housing space housing the flat cables as a constricting space, and providing a movement pressing portion of the cable pressing body at a predetermined position relative to the flat cables, and based on such knowledge, arrived at completion of the present disclosure according to the third aspect.

The rotary connector device of the embodiment according to the third aspect includes a rotating body having a cylindrical portion and is rotatable, a fixed body having an outer wall portion and a constricting outer wall portion arranged to oppose an outer surface of the cylindrical portion in which an opposing distance between the cylindrical portion and the constricting outer wall portion is shorter than an opposing distance between the cylindrical portion and the outer wall portion, at least one flat cable housed in a housing space between the rotating body and the fixed body, and wound in one direction relative to the cylindrical portion of the rotating body and wound in another direction relative to the outer wall portion of the fixed body, and including a reversing portion at which a rotation direction winding in one direction and a rotation direction winding in another direction reverse, and a cable pressing body including one movement pressing portion provided in a movable manner to an inner side of the reversing portion of the flat cable, in which the movement pressing portion moves in a housing space while pressing a portion of the flat cable wound in one direction relative to the cylindrical portion of the rotating body against the cylindrical portion of the rotating body in response to rotation of the rotating body.

The rotary connector device according to two embodiments ("Embodiment 3-1" and "Embodiment 3-2") which are exemplary modes of the third aspect will be specifically described while referencing the drawings.

It should be noted that a reference symbol with the lead starting with "3" is attached in each embodiment of the third aspect.

### Embodiment 3-1

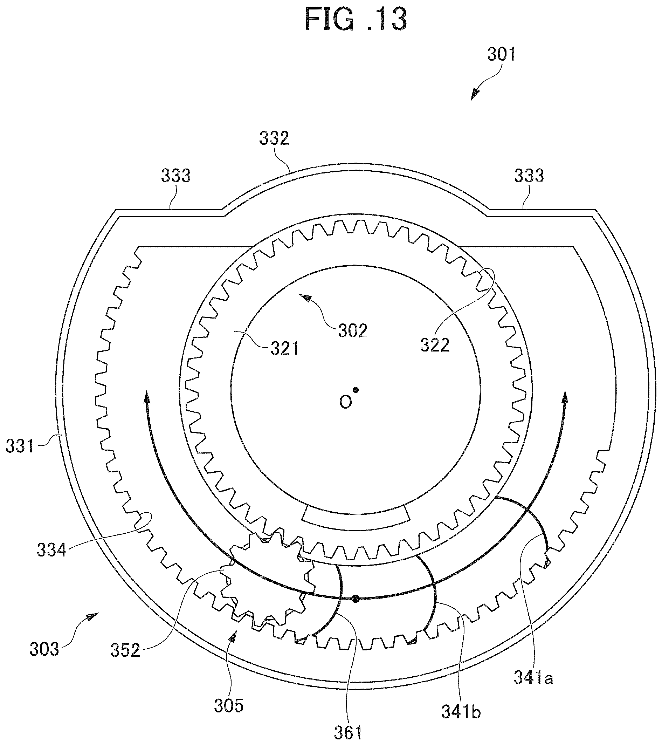

FIG. 13 is a partial transparent plan view showing an example viewing a rotary connector device of Embodiment 3-1 from one side.

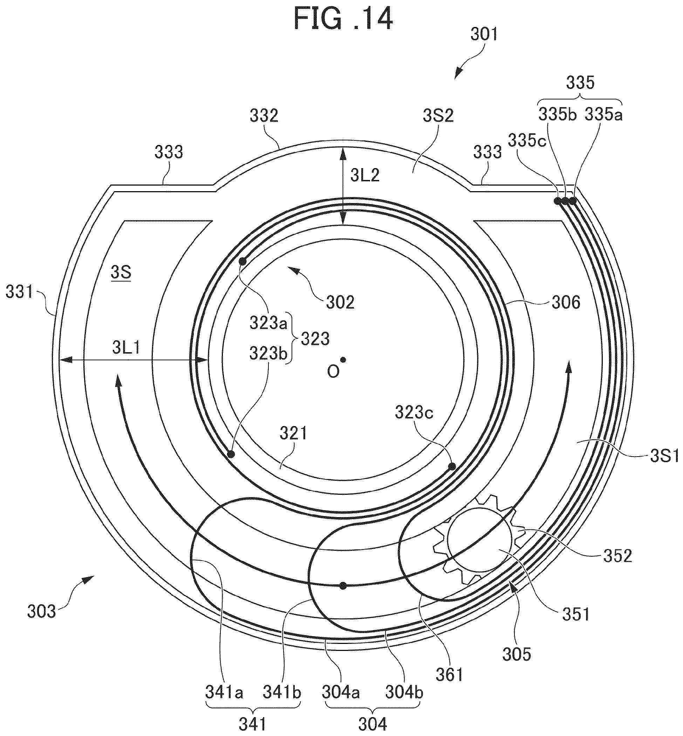

FIG. 14 is a partial transparent plan view showing an example viewing the rotary connector device of Embodiment 3-1 from another side, and is in a neutral position state.

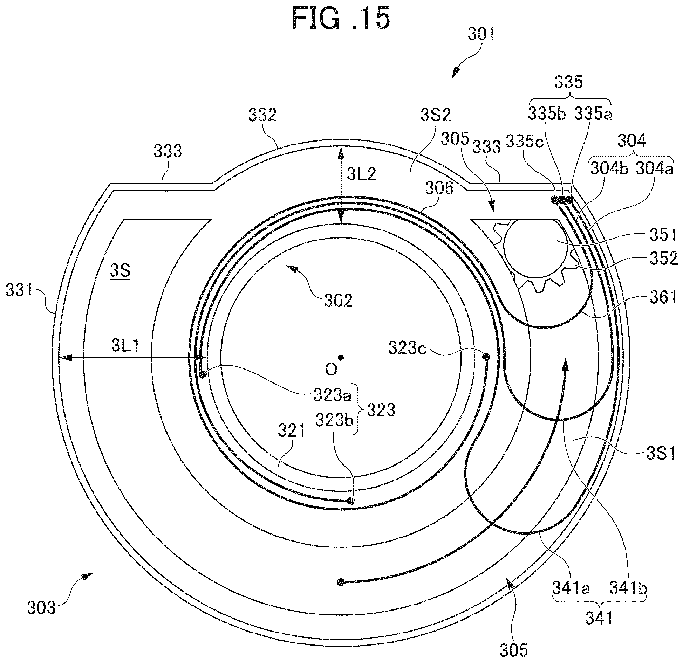

FIG. 15 is a partial transparent plan view showing a state of the rotary connector device of FIG. 14 when the steering (not shown) rotates 250 degrees counter clockwise.

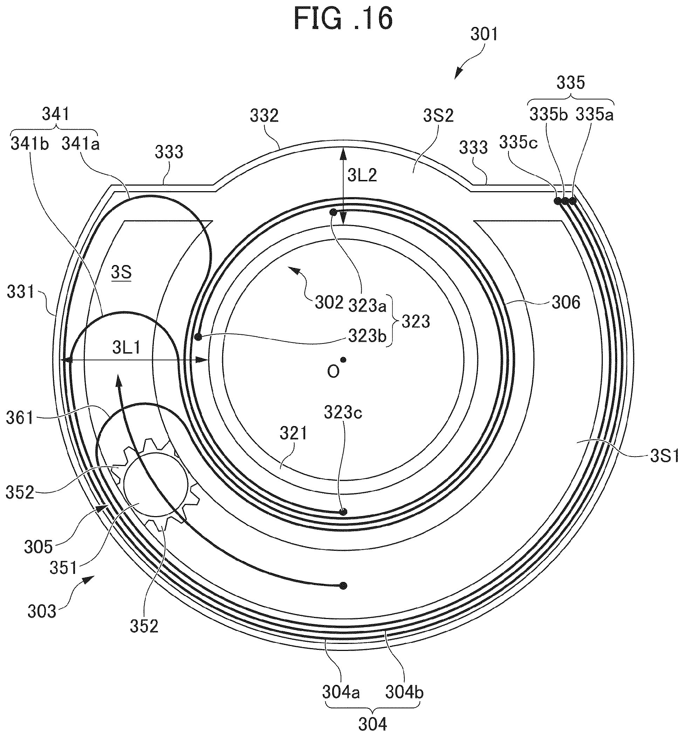

FIG. 16 is a partial transparent plan view showing a state of the rotary connector device of FIG. 14 when the steering rotates 250 degrees clockwise.

FIGS. 13 to 16 and later drawings, for convenience, show a state in which a top plate and a bottom plate coupled vertically to each of the cylindrical portion 321 of the rotating body 302 as well as the outer wall portion 331 and the constricting outer wall portion 332 of the fixed body 303, and forming a housing space 3S together with a rotating body 302 and fixed body 303 are transparent.

As shown in FIGS. 13 and 14, the rotary connector device 301 of Embodiment 3-1 includes a rotating body 302, a fixed body 303, at least one flat cable 304 and a cable pressing body 305.

The rotary connector device 301 is equipped to an automobile, and electrically connects electrical equipment (not shown) provided on the rotating body 302 side with electrical equipment (not shown) provided on the fixed body 303 side.

The rotating body 302 rotates according to rotation of the steering (not shown), and the fixed body 303 does not rotate according to rotation of the steering.

The steering is equipped in a rotatable manner to the vehicle (not shown).

The rotating body 302 constituting the rotary connector device 301 includes a cylindrical portion 321, and is mounted in a rotatable manner to an inner side of the fixed body 303.

The cylindrical portion 321 forms a lateral wall on the inner side of the rotary connector device 301.

The steering shaft (not shown) coupled to the steering (not shown) is provided in an inserted manner at the inner side of the cylindrical portion 321.

In response to rotation of the steering, the steering shaft rotates around the rotation axis O, and in response to rotation of the steering shaft, the rotating body 302 rotates around a rotation axis O relative to the fixed body 303.

The rotating body 302 rotates less than 1 revolution, preferably about 0.5 to 0.8 revolutions, from the neutral position either clockwise or counter clockwise.

Even when the steering shaft rotates, the fixed body 303 does not rotate.

In addition, as shown in FIG. 13, the rotating body 302 further includes a plurality of inside tooth portions 322 provided over the entire circumference of the circumferential direction of the cylindrical portion 321, on one end side of the cylindrical portion 321.

The inside tooth portion 322 is provided at the outer peripheral surface side of the cylindrical portion 321.

The form in which the inside tooth portion 322 provided to one end side of the cylindrical portion 321 is installed to the cylindrical portion 321 is not particularly limited, and may be directly provided to the outer peripheral surface of one end portion of the cylindrical portion 321, or may be provided by a cylindrically shaped coupling portion (not shown) including the inside tooth portion 322 at the outer peripheral surface coupling to one end portion of the cylindrical portion 321.

The fixed body 303 includes the outer wall portion 331 and the constricting outer wall portion 332.

Each of the outer wall portion 331 and the constricting outer wall portion 332 extends along the circumferential direction of the cylindrical portion 321 of the rotating body 302, and is arranged opposing the outer surface of the cylindrical portion 321.

The outer wall portion 331 and the constricting outer wall portion 332 form a lateral wall on the outer side of the rotary connector device 301.

As shown in FIG. 14, the opposing distance 3L2 between the outer surface of the cylindrical portion 321 and the inner surface of the constricting outer wall portion 332 (hereinafter also referred to as second opposing distance 3L2) is shorter than the opposing distance 3L1 between the outer surface of the cylindrical portion 321 and the inner surface of the outer wall portion 331 (hereinafter also referred to as first opposing distance 3L1).

In the housing space 3S, the region in which the outer surface of the cylindrical portion 321 and the inner surface of the outer wall portion 331 are opposing is a non-annular movement space 3S1, and a region in which the outer surface of the cylindrical portion 321 and the inner surface of the constricting outer wall portion 332 are opposing is a non-annular constricting space 3S2.

For example, as shown in FIG. 14, the movement space 3S1 is a circular arc shape, and the constricting space 3S2 is a circular arc shape.

Due to the second opposing distance 3L2 being shorter than the first opposing distance 3L1, centering on the central axis O, the length in the radial direction of the constricting space 3S2 is shorter than the length in the radial direction of the movement space 3S1, i.e. the width of the constricting space 3S2 is smaller than the width of the movement space 3S1.

Herein, although an example in which the outer wall portion 331 and the constricting outer wall portion 332 are coupled via two flat-plate coupling portions 333, the coupling state between the outer wall portion 331 and the constricting outer wall portion 332 is not particularly limited.

For example, the coupling portion 333 may be a curved plate shape, or the outer wall portion 331 and the constricting outer wall portion 332 may couple directly without going through the coupling portions 333.

In addition, with the conventional rotary connector device, since the rotating body rotates at least one revolution either clockwise or counter clockwise, it is necessary for the width of the annular housing space to be uniform or substantially uniform over the entire circumference to the extent that constituent members such as the reversing portion of the flat cable is moveable over the entire circumference of the housing space.

On the other hand, with the rotary connector device 301, since the rotating body 302 rotates less than one revolution either clockwise or counter clockwise, i.e. does not rotate more than one revolution, the constituent members such as the reversing portion 341 of the flat cable 304 does not move over the entire circumference of the housing space 3S, but rather moves in part of the housing space 3S, i.e. the movement space 3S1.

In the region of the housing space 3S in which the constituent members such as the reversing portion 341 of the flat cable 304 do not move, since a width on the same order as the movement space 3S1 becomes unnecessary, the fixed body 303 can include the constricting outer wall portion 332 for forming the constricting space 3S2 having a narrower width than the movement space 3S1.

As a result, compared to a conventional rotary connector device, it is possible to make the rotary connector device 301 more compact.

In the case of equipping the conventional rotary connector device to an automobile, although a predetermined space is necessary over the entire circumference relative to the rotation center of the rotating body, the rotary connector device 301 can be equipped even without a space in a predetermined direction, e.g., upwards, relative to the rotation center.

In this way, the degrees of freedom in design of the rotary connector device 301 improve.

In addition, as shown in FIG. 13, the fixed body 303 further includes a plurality of outside tooth portions 334 provided along the extending direction of the outer wall portion 331, at one end side of the outer wall portion 331.

The outside tooth portions 334 are provided to the inner peripheral side of the outer wall portion 331.

The form in which the outside tooth portions 334 provided to one end side of the outer wall portion 331 are installed to the outer wall portion 331 is not particularly limited, and may be directly provided to the inner surface of one end portion of the outer wall portion 331, or may be provided by a cylindrical coupling portion (not shown) equipped with the outside tooth portion 334 at the inner surface coupling to the one end portion of the outer wall portion 331.

At least one flat cable 304 is housed in the housing space 3S between the rotating body 302 and the fixed body 303.

Herein, although the two flat cables 304a and 304b are housed, the number of flat cables is not particularly limited.

The flat cable 304 is wound in one direction relative to the outer surface of the cylindrical portion 321, and is wound in the other direction relative to the inner surface of the outer wall portion 331.

Herein, as shown in FIG. 14, the flat cable 304 is wound clockwise relative to the outer surface of the cylindrical portion 321, and is wound counter clockwise relative to the inner surface of the outer wall portion 331.

In addition, the flat cable 304 is not wound on the inner surface of the constricting outer wall portion 332.

The outer wall portion 331 of the fixed body 303 is a portion in which the flat cable 304 wound in one direction relative to the cylindrical portion 321 of the rotating body 302 is wound in the other direction.

In addition, the constricting outer wall portion 332 of the fixed body 303 is a portion in which the flat cable 304 wound in one direction relative to the cylindrical portion 321 of the rotating body 302 is not wound in the other direction.

In this way, the flat cable 304 wound in one direction relative to the cylindrical portion 321 of the rotating body 302 is wound on the outer wall portion 331, but not wound on the constricting outer wall portion 332.

In addition, the outer wall portion 331 is not arranged opposing the entire circumference of the cylindrical portion 321 of the rotating body 302 over the circumferential direction, is a circular arc shape, and is arranged opposing only part of the cylindrical portion 321 over the circumferential direction.

In addition, the constricting outer wall portion 332 is not arranged opposing the entire circumference of the cylindrical portion 321 over the circumferential direction, is a circular arc shape, and is arranged opposing only part of the cylindrical portion 321, i.e. at least part of a portion of the cylindrical portion 321 excluding a portion opposing with the outer wall portion 331, over the circumferential direction.

Centered around the central axis O, the length dimension in the radial direction of the constricting outer wall portion 332 is small compared to the length dimension in the radial direction of the outer wall portion 331.

In addition, the flat cable 304 includes the reversing portion 341 at which the rotation direction winding in one direction and the rotation direction winding in the other direction reverse.

The reversing portion 341 is a so-called U-turn portion.

The reversing portion 341 of the flat cable 304 moves clockwise and counter clockwise in the movement space 3S1 in which the cylindrical portion 321 of the rotating body 302 and the outer wall portion 331 of the fixed body 303 are opposing in response to rotation of the rotating body 302, while not moving in the constricting space 3S2 in which the cylindrical portion 321 of the rotating body 302 and the constricting outer wall portion 332 of the fixed body 303 are opposing.

In this way, the reversing portion 341 of the flat cable 304 is housed in the movement space 3S1 of the housing space 3S.

Assuming that the reversing portion 341 moves in the constricting space 3S2, the curvature of the reversing portion 341 when moving in the constricting space 3S2 would become large compared to the curvature of the reversing portion 341 when moving in the movement space 3S1.

For this reason, the durability performance of the flat cable 304 declines accompanying an increase in curvature of the reversing portion 341, and it becomes difficult to use the rotary connector device 301 over a long period.

In addition, the end portion on the inner peripheral side which is one end of the flat cable 304 includes a connector (not shown), and is connected to a rotating body connection portion 323 of the rotating body 302.

For example, the first flat cable 304a is connected to the rotating body connection portion 323a, the second flat cable 304b is connected to the rotating body connection portion 323b, and the rotating body connection portion 323a and the rotating body connection portion 323b are arranged with a predetermined interval in the circumferential direction.

In addition, the end portion on the outer peripheral side which is the other end of the flat cable 304 includes a connector (not shown), and is connected to a fixed body connection portion 335 of the fixed body 303.

For example, the first flat cable 304a is connected to the fixed body connection portion 335a, the second flat cable 304b is connected to the fixed body connection portion 335b, and the fixed body connection portion 335a and the fixed body connection portion 335b are arranged at almost the same positions or the same positions in the circumferential direction.

For example, the fixed body connection portion 335 is provided within the movement space 3S1.

According to such a configuration, the rotating body connection portion 323 relatively moves in relation to the fixed body connection portion 335 in response to rotation of the rotating body 302, and the flat cable 304 is wound onto the cylindrical portion 321 of the rotating body 302 or unwound from the cylindrical portion 321, and thus the reversing portion 341 of the flat cable 304 moves in response to rotation of the rotating body 302.

The connector (not shown) provided to the end portion of the flat cable 304 connected to the rotating body connection portion 323 electrically connects with various electrical equipment such as the airbag device equipped on the steering side.

In addition, the connector (not shown) provided to the end portion of the flat cable 304 connected to the fixed body connection portion 335 electrically connects with various electrical equipment such as vehicle control devices equipped on the vehicle side.

Then, the various electrical equipment on the vehicle side and the various electrical equipment on the steering side are electrically connected mutually via the flat cable 304 of the rotary connector device 301.

The cable pressing body 305 suppressing float of the flat cable 304 includes one movement pressing portion 351.

The movement pressing portion 351 is moveable clockwise and counter clockwise in the movement space 3S1, and is provided in a moveable manner to an inner side of the reversing portion 341 of the flat cable 304.

In the case of there being a plurality of the flat cables 304, the movement pressing portion 351 is arranged at the inner side of the reversing portion of the flat cable (herein, the inner side of the reversing portion 341b of the second flat cable 304b) arranged on the outermost circumference among the plurality of flat cables wound on the cylindrical portion 321 of the rotating body 302.

The movement pressing portion 351 is a columnar shape or cylindrical shape, for example.

In addition, the movement pressing portion 351 may be an elastic body or rigid body.

In addition, as shown in FIG. 13, the cable pressing body 305 further includes a plurality of tooth portions 352 provided along the entire circumference in the circumferential direction of the movement pressing portion 351 at one end side of the movement pressing portion 351.

The form in which the tooth portions 352 provided to one end side of the movement pressing portion 351 are installed to the movement pressing portion 351 is not particularly limited, and may be directly provided to the outer peripheral surface of one end portion of the movement pressing portion 351, or may be provided by a columnar or cylindrically shaped coupling portion (not shown) including the tooth portions 352 at the outer peripheral surface coupling to one end portion of the movement pressing portion 351.

The movement pressing portion 351 moves in the movement space 3S1 of the housing space 3S, while pressing the portion of the flat cable 304 wound in one direction relative to the cylindrical portion 321 of the rotating body 302 against the cylindrical portion 321 of the rotating body 302, in response to rotation of the rotating body 302.

More specifically, in response to rotation of the rotating body 302, the tooth portions 352 of the cable pressing body 305 rotate while meshing with the inside tooth portion 322 of the rotating body 302 and the outside tooth portion 334 of the fixed body 303, and the movement pressing portion 351 of the cable pressing body 305 moves in the movement space 3S1.

In other words, the movement pressing portion 351 moves by the rotation of the rotating body 302 without going through the flat cable 304.

In this way, the movement mechanism of the movement pressing portion 351 differs from the movement mechanism of the reversing portion 341 of the flat cable 304.

For example, the movement speed of the movement pressing portion 351 is the same as the movement speed of the reversing portion 341.

The movement pressing portion 351 arranged on the inner side of the reversing portion 341 of the flat cable 304 is provided at a predetermined interval in the circumferential direction relative to the reversing portion 341.

In addition, also when the movement pressing portion 351 is moving clockwise and counter clockwise in response to rotation of the rotating body 302, since the movement mechanism of the movement pressing portion 351 and the movement mechanism of the reversing portion 341 differ, the movement pressing portion 351 moves with a predetermined interval in the circumferential direction relative to the reversing portion 341.

The movement pressing portion 351 moves in the movement space 3S1, while not moving in the constricting space 3S2, similarly to the reversing portion 341.

In this way, when the rotating body 302 moves clockwise, it does not mean that the movement pressing portion 351 will move while pressing the inner side of the reversing portion 341.

In addition, when the rotating body 302 moves counter clockwise, it does not mean that the reversing portion 341 will move while pressing the movement pressing portion 351.

For this reason, it is possible to avoid a durability performance decline of the flat cable 304 caused by contact of the movement pressing portion 351 with the reversing portion 341.

Then, when the movement pressing portion 351 which moves with a predetermine interval with the reversing portion 341 on the inner side of the reversing portion 341 moves in the movement space 3S1, the movement pressing portion 351 moves in the movement space 3S1 while pressing the flat cable portion wound in one direction relative to the cylindrical portion 321 against the cylindrical portion 321.

By reducing the winding looseness of the portion of the flat cable 304 wound on the cylindrical portion 321, it is thereby possible to suppress float of the flat cable 304.

In addition, by the movement pressing portion 351 being an elastic body, and causing the movement pressing portion 351 having elastic force to deform in advance and installing to the rotary connector device 301, the movement pressing portion 351 can further press the flat cable portion wound in one direction relative to the cylindrical portion 321 against the cylindrical portion 321 by the repulsive elastic force of the movement pressing portion 351.

For this reason, float of the flat cable 304 can be further suppressed.

In addition, as in the conventional rotary connector device, with a configuration in which the width of the annular housing space is uniform or substantially uniform along the entire circumference to the extent that the constituent members such as the reversing portion of the flat cable are moveable along the entire circumference of the housing space, a sheet member not including electrical wires, a so-called dummy cable, can be used in order to suppress flat cable float.

However, since the rotary connector device 301 includes the constricting outer wall portion 332 for furthering compactness, the constricting space 3S2 having a narrower width than the movement space 3S1 exists in the housing space 3S.

In the above way, the reversing portion 341 of the flat cable 304 does not move in the constricting space 3S2, and furthermore, the reversing portion of the dummy cable does not move in the constricting space 3S2; therefore, even if using the dummy cable in the rotary connector device 301 as is conventionally, it is not possible to sufficiently suppress cable float in the rotary connector device 301.

In addition, the rotary connector device 301 includes the constricting outer wall portion 332 not allowing movement in the constricting space 3S2, and thus it is possible to efficiently suppress flat cable float by one movement pressing portion.

In addition, the rotary connector device 301 may further include a dummy cable 306 housed in the housing space 3S between the rotating body 302 and the fixed body 303.

The dummy cable 306 is a sheet-shaped member not including electrical wires.

When the rotary connector device 301 includes the dummy cable 306, the movement pressing portion 351 of the cable pressing body 305 is provided in a moveable manner to an inner side of the reversing portion 361 of the dummy cable 306 described later.

From the outer side of the flat cable 304, the dummy cable 306 is wound in one direction relative to the outer surface of the cylindrical portion 321 of the rotating body 302, and is wound in the other direction relative to the inner surface of the outer wall portion 331 of the fixed body 303.

In the case of there being a plurality of the flat cables 304, from the outer side of the flat cable arranged on the outermost circumference among the plurality of flat cables wound on the cylindrical portion 321 of the rotating body 302 (herein, the second flat cable 304b), they are wound in one direction relative to the outer surface of the cylindrical portion 321 of the rotating body 302, and wound in the other direction relative to the inner surface of the outer wall portion 331 of the fixed body 303.

In addition, the dummy cable 306 is not wound on the inner surface of the constricting outer wall portion 332.

Similarly to the flat cable 304, the dummy cable 306 includes the reversing portion 361 at which the rotation direction winding in one direction and the rotation direction winding in the other direction reverse.

The reversing portion 361 of the dummy cable 306 moves clockwise or counter clockwise in the movement space 3S1 in response to rotation of the rotating body 302, while not moving in the constricting space 3S2.

The flat cable 306, bordering on the reversing portion 361, pushes the flat cable portion wound on the cylindrical portion 321 from the outer side against the cylindrical portion 321 of the rotating body 302, and pushes the flat cable portion wound on the outer wall portion 331 from the outer side against the outer wall portion 331 of the fixed body 303.

The end portion on the inner peripheral side that is one end of the flat cable 306 is connected to the rotating body connection portion 323c of the rotating body 302.

For example, the rotating body connection portion 323c connecting to the dummy cable 306, and the rotating body connection portion 323 (323a, 323b) connecting to the flat cable 304 are arranged with a predetermined interval in the circumferential direction.

In addition, the end portion on the outer peripheral side which is the other end of the flat cable 306 is connected to the fixed body connection portion 335c of the fixed body 303.

For example, the fixed body connection portion 335c and the fixed body connection portion 335 (335a, 335b) are arranged at almost the same positions or the same position in the circumferential direction.

According to such a configuration, the rotating body connection portion 323c relatively moves in relation to the fixed body connection portion 335c in response to rotation of the rotating body 302, and the flat cable 306 is wound onto the cylindrical portion 321 of the rotating body 302 or unwound from the cylindrical portion 321, and thus the reversing portion 361 of dummy cable 306 moves in response to rotation of the rotating body 302.

The reversing portion 361 of dummy cable 306 is provided at a predetermined interval in the circumferential direction relative to the movement pressing portion 351, similarly to the flat cable 304.

In addition, also when the movement pressing portion 351 is moving clockwise and counter clockwise in response to rotation of the rotating body 302, since the movement mechanism of the movement pressing portion 351 and the movement mechanism of the reversing portion 361 of the dummy cable 306 differ, the movement pressing portion 351 moves with a predetermined interval in the circumferential direction relative to the reversing portion 361.

In the above-mentioned way, with the rotary connector device 301, since the fixed body 303 includes the constricting outer wall portion 332 in order to form within the rotary connector device 301 the constricting space 3S2 in which the width of the housing space 3S is narrow, it is possible to increase the ellipticity of the transverse sectional shape of the steering column applied to the rotary connector device 301.

Since a steering column having such a flat shape can be suitably used in irregular steering, the rotary connector device 301 can be suitably used in steer-by-wire.

Such steering is suitable for retracting steering which can be stored in a dashboard.

In addition, when the steering column is a flat shape, the gauge panel (so-called instrument panel) located above the steering column becomes easy to see while driving, and the space below the steering column expands, whereby there are advantages such as being able to widen the legroom of the driver' s seat.

For this reason, the degrees of design freedom of the vehicle including the rotary connector device 301 further improve.

According to the above described Embodiment 3-1, by establishing part of the housing space housing the flat cables as a constricting space, and providing the movement pressing portion of the cable pressing body at a predetermined position relative to the flat cables, the rotary connector device achieve further compactness, as well as being able to suppress flat cable float.

It should be noted that, in the above description, as shown in FIGS. 13 and 14, the inside tooth portion 322, the outside tooth portion 334 and the tooth portion 352 are provided to only one direction side of the rotary connector device 301; however, these tooth portions may be provided to the other direction side of the rotary connector device 301, i.e. the side shown in FIG. 14, in addition to the one direction side of the rotary connector device 301.

### Embodiment 3-2

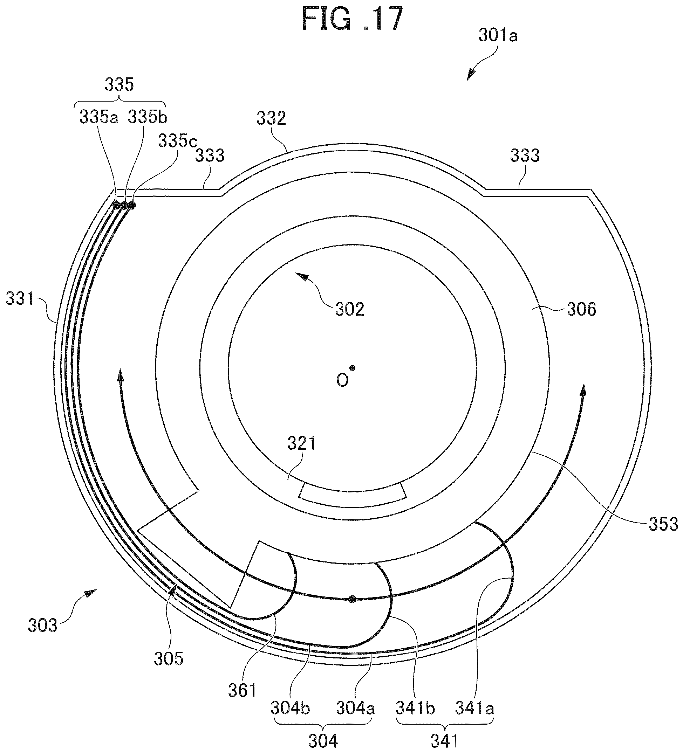

FIG. 17 is a partial transparent plan view showing an example viewing a rotary connector device of Embodiment 3-2 from one side.

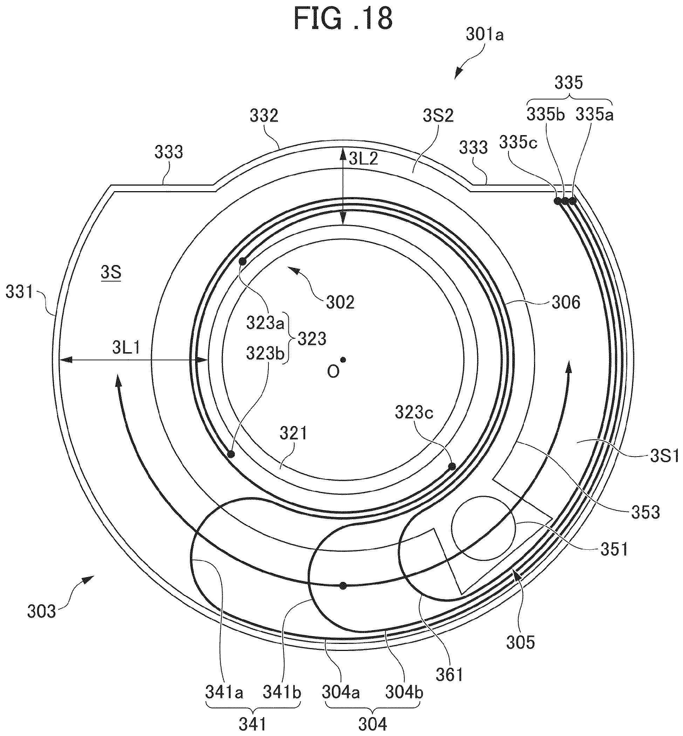

FIG. 18 is a partial transparent plan view showing an example viewing a rotary connector device of Embodiment 3-2 from the other side.

It should be noted that, in the embodiments illustrated below, the same reference numbers are attached to constituent portions that are identical to the rotary connector device 301 of the Embodiment 3-1, and redundant explanations will be omitted or simplified.

The rotary connector device 301a of Embodiment 3-2 is basically the same configuration as the rotary connector device 301 of Embodiment 3-1 other than not being equipped with the inside tooth portion 322, outside tooth portion 334 and tooth portion 352, and the cable pressing body 305 having the ring portion 353.

For this reason, mainly the differing configurations thereof will be described herein.

As shown in FIGS. 17 and 18, in the rotary connector device 301a of Embodiment 3-2, the cable pressing body 305 further includes a ring portion 353.

The ring portion 353 is housed in the housing space 3S, and supports the movement pressing portion 351.

The ring portion 353 is a flat plate shape, for example.

The ring portion 353 couples to one end side of the cylindrical portion 321 of the rotating body 302, and extends towards the outer side in the radial direction, towards the fixed body 303, centering on the central axis O.

The edge of the flat cable 304 abuts at least part of the ring portion 353, e.g., a main surface of the ring portion 353.

In addition, the portion of the ring portion 353 supporting the movement pressing portion 351 partially extends toward the outer side in the radial direction, centering on the central axis O.

The movement pressing portion 351 is installed in a standing manner on the ring portion 353.

The ring portion 353 rotates around the central axis O in response to rotation of the rotating body 302.

Since the rotation mechanism of the ring portion 353 differs from the movement mechanism of the reversing portion 341 of the flat cable 304, the ring portion 353 rotates according to rotation of the rotating body 302 without going through the flat cable 304.

The rotation speed of the ring portion 353 rotating in response to rotation of the rotating body 302 is slower than the rotation speed of the rotating body 302, and is on the order of 1/3 slower than the rotation speed of the rotating body 302, for example

By the ring portion 353 of the cable pressing body 305 rotating in response to rotation of the rotating body 302, the movement pressing portion 351 provided on the ring portion 353 of the cable pressing body 305 moves in the movement space 3S1.

In addition, since the rotation speed of the ring portion 353 rotating in response to rotation of the rotating body 302 is slower than the rotation speed of the rotating body 302, the movement pressing portion 351 moves with a predetermined interval in the circumferential direction relative to the reversing portion 341.

Similarly to the rotary connector device 301 of Embodiment 3-1, the movement pressing portion 351 moves in the movement space 3S1 of the housing space 3S, while pressing the flat cable portion wound in one direction relative to the cylindrical portion 321 against the cylindrical portion 321, in response to rotation of the rotating body 302.

For this reason, the rotary connector device 301a can suppress flat cable float.

According to the above described Embodiment 3-2, even if including the ring portion supporting the movement pressing portion in place of the configuration of the inside tooth portion, outside tooth portion and tooth portion, the rotary connector device achieve further compactness, as well as being able to suppress flat cable float.

It should be noted that although the ring portion 353 is provided to only one direction side of the rotary connector device 301a in the above as shown in FIGS. 17 and 18, the ring portion 353 may be provided also to the other direction side of the rotary connector device 301a, or the inside tooth portion 322, the outside tooth portion 334 and the tooth portion 352 may be provided to the other direction side of the rotary connector device 301a.

Although an embodiment of a third aspect has been described above, the third aspect is not to be limited to the above embodiment, and includes every mode encompassed by the concept and claims of the present disclosure, and can be modified in various ways within the scope of the present disclosure.

### EXPLANATION OF REFERENCE NUMERALS

120, 120', 130, 140: rotary connector device
111, 111', 111a, 111b, 121, 121', 131, 141: fixed body
112, 122, 132, 142: rotating body
123a, 123b, 123c, 133a, 133b, 133c, 143a, 143b, 143c: flat cable (1FC1 to 3)
121x: step portion
123Ra, 123Rb, 123Rc, 133Ra, 133Rb, 133Rc, 143Ra, 143Rb, 143Rc: reversing portion
126R, 136Ra, 136Rb, 136Rc: dummy cable reversing portion
124a, 124b, 134a, 134b, 144: fixed body connection portion
125a, 125b, 125a', 125b', 135a, 135b, 135c, 145a, 145b: rotating body connection portion
126, 136: dummy cable (1DC)
147: first rib (first rib)
148: column
149: second rib (second rib)
150: ring portion
201, 201a: rotary connector device
202: rotating body
221: cylindrical portion
222: rotating body connection portion
203: fixed body
231: outer wall portion
232 constricting outer wall portion
233: coupling portion
234: fixed body connection portion
204a, 204b, 204c, 204d, 204e, 204f, 204g: flat cable
204f1, 204g1: rigidity adding portion
241a, 241b, 241c, 241d, 241e, 241f, 241g: reversing portion
O: rotation axis
2L1: opposing distance (first opposing distance)
2L2: opposing distance (second opposing distance)
2S: housing space
2S1: movement space
2S2: constricting space
301, 301a: rotary connector device
302: rotating body
321: cylindrical portion
322: inside tooth portion
323, 323a, 323b, 323c: rotating body connection portion 303: fixed body
331: outer wall portion
332: constricting outer wall portion
333: coupling portion
334: outside tooth portion
335, 335a, 335b, 335c: fixed body connection portion
304: flat cable
304a: first flat cable
304b: second flat cable
341: reversing portion
341a: reversing portion of first flat cable
341b: reversing portion of second flat cable
305: cable pressing body
351: movement pressing portion
352: tooth portion
353: ring portion
306: dummy cable
361: reversing portion of dummy cable
O: rotation axis
3L1: opposing distance (first opposing distance)
3L2: opposing distance (second opposing distance)
3S: housing space
3S1: movement space
3S2: constricting space

## Claims

1. A rotary connector device comprising:
a fixed body which, in a partial region in a circumferential direction in a plan view, has an inner peripheral surface of tubular shape having a distance from a center of a circular arc that is shorter than a radius of a circle defining at least part of one other region as a circular arc;
a rotating body of cylindrical shape mounted in a rotatable manner on an inner side of the fixed body, and having an outer peripheral surface of cylindrical shape which is concentric with the circle; and
at least one flat cable housed in a housing space between the inner peripheral surface of the fixed body and the outer peripheral surface of the rotating body, and wound around the rotating body,
wherein the flat cable is wound in one direction relative to the rotating body and wound in another direction relative to the fixed body, and includes a reversing portion at which a rotation direction winding in one direction and a rotation direction winding in another direction reverse, and
wherein the reversing portion is movable in response to rotation of the rotating body.

2. The rotary connector device according to claim 1, further comprising at least one dummy cable wound in one direction relative to the rotating body and wound in another direction relative to the fixed body together with the flat cable, and including a dummy cable reversing portion at which a rotation direction winding in one direction and a rotation direction winding in another direction reverse, the dummy cable reversing portion being movable in response to rotation of the rotating body.

3. The rotary connector device according to claim 1, further comprising, in the housing space,
a ring portion that at least partially abuts an edge of the flat cable;
a first rib provided in a standing manner from the ring portion so as to surround, in a circular arc shape, a region of the flat cable wound on the cylindrical portion of the rotating body;
a column disposed on an inner side of the reversing portion of at least one flat cable among the flat cables, and having an axis fixed to freely rotate to the ring portion; and
a second rib disposed on an outer side of the reversing portion where the column is disposed on an inner side thereto, the second rib being a circular arc shape following a circumferential surface of the column, and installed in a standing manner from the ring portion so as to interpose the flat cable and oppose the column.

4. The rotary connector device according to claim 1,
wherein a plurality of the flat cables are housed in the housing space in a laminated state, and
wherein among the plurality of the flat cables that are laminated, a flat cable laminated at a position most distanced relative to the outer peripheral surface of the rotating body and the inner peripheral surface of the fixed body is a high-rigidity flat cable having higher flexural rigidity than other among the plurality of the flat cables.

5. The rotary connector device according to claim 4, wherein the high-rigidity flat cable includes a rigidity adding portion that adds rigidity.

6. The rotary connector device according to claim 5, wherein the rigidity adding portion is a plate member adapted to be pasted to an outer surface of the flat cable.

7. The rotary connector device according to claim 5, wherein the rigidity adding portion is covered by an insulator.

8. The rotary connector device according to claim 1, further comprising
one movement pressing portion provided in a movable manner to an inner side of the reversing portion of the flat cable,
wherein the movement pressing portion includes a cable pressing body that moves in the housing space while pressing a portion of the flat cable wound in one direction relative to the rotating body against the outer peripheral surface of the rotating body.

9. The rotary connector device according to claim 8, wherein
the rotating body further includes a plurality of inside tooth portions provided at one end side thereof along the circumferential direction of the rotating body,
the fixed body further includes a plurality of outside tooth portions provided at one end side thereof along an extending direction of the fixed body,
the cable pressing body further includes a plurality of tooth portions provided at one end side of the movement pressing portion, along the circumferential direction of the movement pressing portion, and
the movement pressing portion of the cable pressing body moves by the tooth portions of the cable pressing body rotating while meshing with the inside tooth portions of the rotating body and the outside tooth portions of the fixed body in response to rotation of the rotating body.

10. The rotary connector device according to claim 8, wherein
the cable pressing body further includes a ring portion that supports the movement pressing portion, at least partial abuts an edge of the flat cable, and rotates in response to rotation of the rotating body, and
the movement pressing portion of the cable pressing body moves by the ring portion of the cable pressing body rotating in response to rotation of the rotating body.

11. The rotary connector device according to any one of claims 8 to 10, wherein the reversing portion moves in a movement space in which the outer peripheral surface of the rotating body and the inner peripheral surface of the fixed body are opposing in the other region of the circumferential direction, in response to rotation of the rotating body, and does not move in a constricting space in which the outer peripheral surface of the rotating body and the inner peripheral surface of the fixed body are opposing in the partial region of the circumferential direction.

12. The rotary connector device according to any one of claims 8 to 10, wherein the flat cable is not wound on the inner peripheral surface of the fixed body in the partial region of the circumferential direction.

13. The rotary connector device according to any one of claims 8 to 10, wherein the movement pressing portion of the cable pressing body does not move in a constricting space in which the outer peripheral surface of the rotating body and the inner peripheral surface of the fixed body are opposing in the partial region of the circumferential direction.

14. The rotary connector device according to any one of claims 8 to 10, further comprising a dummy cable housed in the housing space between the rotating body and the fixed body, and wound from an outer side of the flat cable in one direction relative to the outer peripheral surface of the rotating body, and wound in another direction relative to the inner peripheral surface of the fixed body.
